# EUROPÄISCHE PATENTSCHRIFT

(11) **EP 2 892 688 B1**
(45) Veröffentlichungstag und Bekanntmachung des Hinweises auf die Patenterteilung: **02.01.2019**
(21) Anmeldenummer: 13756843.2
(22) Anmeldetag: 22.08.2013
(51) Int. Cl.: B23Q 3/06, B23B 41/12, B23B 29/02, B23Q 16/00

(54) **WERKSTÜCKSPANNVORRICHTUNG UND VERFAHREN MIT EINEM GEGENLAGER FÜR DAS WERKZEUG**
WORKPIECE TENSIONING DEVICE AND A METHOD COMPRISING A COUNTER BEARING FOR THE TOOL
DISPOSITIF DE SERRAGE DE PIÈCE ET PROCÉDÉ COMPRENANT UNE BUTÉE POUR L'OUTIL

(30) Priorität: 07.09.2012 DE 102012108370; 30.01.2013 DE 102013100948
(43) Veröffentlichungstag der Anmeldung: 15.07.2015
(73) Patentinhaber: MAG IAS GmbH, 73054 Eislingen (DE)
(72) Erfinder: BRUDER, Hubert, 77704 Oberkirch (DE); MÜHLEIS, Walter, 73098 Rechberghausen (DE); JENTZSCH, Guido, 74226 Nordheim (DE); SCHMID, Martin, 73230 Kirchheim/Teck (DE); MANOHARAN, Dodwell, 73728 Esslingen (DE); SCHÖNING, Sebastian, 70184 Stuttgart (DE)
(74) Vertreter: Rau, Schneck & Hübner Patentanwälte Rechtsanwälte PartGmbB
(86) Internationale Anmeldenummer: PCT/EP2013/067447
(87) Internationale Veröffentlichungsnummer: WO 2014/037228

(56) Entgegenhaltungen:
- FR-A1- 2 577 454
- JP-A- 2003 181 731
- US-A- 5 209 615
- US-A- 5 788 434
- US-A1- 2010 310 328

## Beschreibung

Die Erfindung betrifft eine Werkzeugmaschine.

Die Erfindung betrifft ferner eine Verwendung einer Werkzeugmaschine.

Weiterhin betrifft die Erfindung ein Verfahren zum Bearbeiten eines Werkstücks an einer Werkzeugmaschine.

Die US 5 788 434 A offenbart eine Werkzeugmaschine und ein Verfahren zum Bearbeiten einer Nockenwellenbohrung eines Zylinderkopfes. Mittels einer Bohrstange werden die in dem Zylinderkopf ausgebildeten Lager bearbeitet.

Aus der FR 2 577 454 A1 ist eine Vertikalbohrmaschine zur Bearbeitung einer Bohrung in einem Werkstück bekannt. Mittels einer Bohrstange wird die Bohrung in dem Werkstück bearbeitet, wobei die Bohrstange in Gegenlagern gelagert ist.

Aus der US 2010/310 328 A1 ist eine Werkzeugmaschine und ein Verfahren zum Bearbeiten einer Kurbelwellenbohrung eines Motorblocks bekannt.

Aus der JP 2003/181 731 A ist eine Positioniervorrichtung zum Positionieren von unterschiedlichen Zylinderköpfen bekannt.

Aus der US 5 209 615 A ist eine Lagerungsvorrichtung zur Lagerung einer Bohrstange bei der Bearbeitung von Zylinderköpfen bekannt.

Der Erfindung liegt die Aufgabe zugrunde, eine zeiteffektive Werkstückbearbeitung zu ermöglichen.

Diese Aufgabe wird durch eine Werkzeugmaschine gemäß Anspruch 1 gelöst.

Eine erfindungsgemäße Werkzeugmaschine umfasst mindestens einen Werkstückträger und mindestens eine Werkzeugspindel, wobei an dem mindestens einen Werkstückträger mindestens eine Werkstückspannvorrichtung fest oder lösbar angeordnet ist.

Der mindestens eine Werkstückträger ist um mindestens eine Achse schwenkbar ist. Die Achse ist dabei beispielsweise eine horizontale Achse (A Achse) oder vertikale Achse (B Achse). Durch die Schwenkbarkeit des Werkstückträgers lässt sich eine daran angeordnete Werkstückspannvorrichtung mit eingespanntem Werkstück schwenken. Es lassen sich dadurch unterschiedliche Bearbeitungsbereiche (die unterschiedliche Zugangsbereiche) bezüglich einer Werkzeugspindel und damit einem Werkzeug ohne Änderung der Aufspannung positionieren.

Bei der erfindungsgemäßen Werkzeugmaschine lässt sich durch entsprechende Positionierung der Werkstückspannvorrichtung gegenüber einer Werkzeugspindel ohne Änderung der Aufspannung des Werkstücks der erste Bearbeitungsvorgang und zeitlich beabstandet dazu der zweite Bearbeitungsvorgang durchführen. Da die Aufspannung nicht geändert werden muss, ergibt sich eine zeiteffektive Bearbeitung.

Da kein Gegenlager für das zweite Werkzeug vorgesehen ist, lässt sich sowohl der erste Bearbeitungsvorgang als auch der zweite Bearbeitungsvorgang an dem Werkstück durchführen, ohne dass dessen Aufspannung geändert werden muss.

Da ferner kein Gegenlager für das zweite Werkzeug vorgesehen ist, lässt sich das Werkstück auf einfache Weise über die Öffnung beladen beziehungsweise entladen, so dass sich auch hier eine zeiteffektive Bearbeitung ergibt.

Weiterhin muss das zweite Werkzeug nicht in ein Gegenlager eingefädelt werden, so dass sich auch hier eine Zeitersparnis ergibt.

Die Werkstückspannvorrichtung lässt sich fest oder lösbar an einem Werkstückträger einer Werkzeugmaschine positionieren. Insbesondere lässt sich durch eine Schwenkbewegung (eventuell kombiniert mit einer oder mehreren Linearbewegungen) der erste Zugangsbereich beziehungsweise der zweite Zugangsbereich relativ zu einer Werkzeugspindel positionieren.

Durch eine erfindungsgemäße Werkzeugmaschine lässt sich auf zeiteffektive Weise eine Bearbeitung an einem Motorblock durchführen; der erste Bearbeitungsvorgang ist insbesondere ein Kurbelwellenlagerbohrungs-Bearbeitungsvorgang und der zweite Bearbeitungsvorgang ist ein Zylinderbohrungs-Bearbeitungsvorgang. Diese Bearbeitungsvorgänge lassen sich in der gleichen Aufspannung an der gleichen Werkzeugmaschine (insbesondere mit Werkzeugwechsel) durchführen.
Günstig ist es, wenn das Gegenlager an der Wandung der mindestens einen Aufnahme angeordnet ist oder gebildet ist oder mindestens einen Teil der Wandung bildet. Das Gegenlager kann dadurch auch Teil der Aufnahme sein und beispielsweise neben der Eigenschaft, eben ein Gegenlager für das erste Werkzeug zu bilden, auch zur Positionierung und Fixierung des Werkstücks beitragen.
Günstig ist es, wenn das Gegenlager quer und insbesondere senkrecht zu der Öffnung angeordnet ist. Dadurch behindert das Gegenlager das Beladen und Entladen eines Werkstücks an der Werkstückspannvorrichtung nicht.
Ganz besonders vorteilhaft ist es, wenn das Gegenlager einen Eintauchbereich für das erste Werkzeug aufweist. Über den Eintauchbereich lässt sich das erste Werkzeug an dem Gegenlager gewissermaßen fixieren. Es wird dadurch eine Fixierungsstelle für das erste Werkzeug vorgegeben. Dadurch lässt sich eine Bearbeitung auch auf einer "längeren Strecke" an dem Werkstück durchführen. Beispielsweise weist das Werkzeug eine Mehrzahl von Schneiden auf, welche dem Werkstück zugestellt werden. Durch das Vorsehen eines Gegenlagers kann das Werkzeug relativ lang ausgebildet sein, das heißt es können beispielsweise über eine größere Strecke eine Mehrzahl von beabstandeten Schneiden vorgesehen sein.

Insbesondere weist der erste Zugangsbereich eine Querschnittsfläche auf, welche quer zu der Öffnung orientiert ist. Dadurch kann entsprechend über das erste Werkzeug das Werkstück bearbeitet werden. Beispielsweise wird ein Kurbelwellenlagerbohrungs-Bearbeitungsvorgang durchgeführt. Günstig ist es, wenn der erste Zugangsbereich eine Querschnittsfläche aufweist, welche mindestens näherungsweise parallel zu dem Gegenlager orientiert ist. Das erste Werkzeug wird gewissermaßen durch die Querschnittsfläche durchgetaucht, so dass es an dem Gegenlager gelagert werden kann.

Aus dem gleichen Grund ist es ferner günstig, wenn dem ersten Zugangsbereich eine lineare erste Richtung zugeordnet ist, welche eine Zuführrichtung oder Bearbeitungsrichtung des ersten Werkzeugs ist, wobei die erste Richtung mindestens näherungsweise parallel oder in einem spitzen Winkel (insbesondere kleiner 30°) zu der Öffnung orientiert ist. Es lassen sich dadurch beispielsweise Kurbelwellenlagerbohrungs-Bearbeitungsvorgänge durchführen.

Es ist dann günstig, wenn der zweite Zugangsbereich eine Querschnittsfläche aufweist, welche parallel oder in einem spitzen Winkel kleiner 30° zu der Öffnung liegt. Der Zugang zu dem Werkstück wird dadurch nicht behindert. Es muss kein Gegenlager vorgesehen werden.

Aus dem gleichen Grund ist es günstig, wenn der zweite Zugangsbereich eine Querschnittsfläche aufweist, welche quer zu dem Gegenlager orientiert ist.

Ferner ist es günstig, wenn dem zweiten Zugangsbereich eine lineare zweite Richtung zugeordnet ist, welche eine Zuführungsrichtung oder Bearbeitungsrichtung des zweiten Werkzeugs ist, wobei die zweite Richtung quer zu der Öffnung orientiert ist. Es wird dadurch ein entsprechender Zugangsbereich bereitgestellt, um den zweiten Bearbeitungsvorgang durchzuführen.

Ganz besonders vorteilhaft ist es, wenn der erste Zugangsbereich und der zweite Zugangsbereich so angeordnet und ausgebildet sind, dass ausgehend von einer Positionierung des ersten Zugangsbereichs zu einem raumfesten Punkt der zweite Zugangsbereich durch eine Schwenkbewegung der Werkstückspannvorrichtung als Ganzes zu diesem raumfesten Punkt positionierbar ist und/oder ausgehend von einer Positionierung des zweiten Zugangsbereichs zu einem raumfesten Punkt der erste Zugangsbereich durch eine Schwenkbewegung der Werkstückspannvorrichtung als Ganzes zu diesem raumfesten Punkt positionierbar ist. Bei einer Werkzeugmaschine wird der raumfeste Punkt durch eine Position eines Werkzeugs an einer Werkzeugspindel vorgegeben. Durch eine entsprechende Schwenkbewegung lässt sich das Werkstück relativ zu dem Werkzeug positionieren, um den entsprechenden Bearbeitungsvorgang durchzuführen. Es sind dabei mit unterschiedlichen Werkzeugen unterschiedliche Bearbeitungsvorgänge an unterschiedlichen Stellen des Werkstücks möglich, ohne dass die Aufspannung geändert werden muss.

Bei einer Ausführungsform umfasst die Werkstückspannvorrichtung eine Höhenverstelleinrichtung, durch welche das Gegenlager in seiner Höhenposition zu einem Aufnahmeboden der mindestens einen Aufnahme feststellbar einstellbar ist. Es ergibt sich dadurch eine Einstellmöglichkeit an der Werkstückspannvorrichtung, um diese an ein Werkstück und beispielsweise an unterschiedliche Werkstücke anpassen zu können.

Bei einem Ausführungsbeispiel ist ein Aufnahmeboden mit mindestens einer Durchtrittsausnehmung für das zweite Werkzeug versehen. Es besteht grundsätzlich die Möglichkeit, einen zweiten Bearbeitungsvorgang von oben her (von der freien Seite des Werkstücks her) durchzuführen oder von unten her (von der Seite des Werkstücks her, mit welcher dieses aufgesetzt ist) durchzuführen. Wenn eine Bearbeitung von unten her erfolgen soll, dann lässt sich durch die mindestens eine Durchtrittsausnehmung des Aufnahmebodens (welche keine Gegenlager bilden) ein Zugriff auf das Werkstück erreichen.

Bei einem Ausführungsbeispiel ist das Werkstück ein Motorblock, der erste Bearbeitungsvorgang ist ein Kurbelwellenlagerbohrungs-Bearbeitungsvorgang und der zweite Bearbeitungsvorgang ist ein Zylinderbohrungs-Bearbeitungsvorgang. Es lässt sich dann sowohl eine Kurbelwellenlagerbohrungs-Bearbeitung als auch Zylinderbohrungs-Bearbeitung durchführen, bei dem die Aufspannung des Werkstücks nicht geändert werden muss. Es ergibt sich dadurch eine zeiteffektive Bearbeitung.

Bei einer Ausführungsform ist die mindestens eine Werkzeugspindel bezogen auf die Schwerkraftrichtung horizontal ausgerichtet. Es ergeben sich dadurch umfangreiche Bearbeitungsmöglichkeiten insbesondere in einem Bearbeitungszentrum als Werkzeugmaschine.

Ganz besonders vorteilhaft ist es, wenn die mindestens eine Werkzeugspindel und der mindestens eine Werkstückträger mindestens in drei linear unabhängigen Richtungen relativ zueinander verschieblich sind. Dadurch ergeben sich umfangreiche Positioniermöglichkeiten und Bearbeitungsmöglichkeiten. Es kann dabei beispielsweise vorgesehen sein, dass die mindestens eine Werkzeugspindel an einem entsprechenden Maschinengestell in zwei linear unabhängigen Richtungen verschieblich ist und der mindestens eine Werkstückträger in der dritten Richtung verschieblich ist. Es ist grundsätzlich auch möglich, dass die Werkzeugspindeln in allen drei Richtungen linear verschieblich an einem Maschinengestell gehalten sind.

Insbesondere sind durch den mindestens einen Werkstückträger über eine Schwenkbewegung wahlweise der erste Zugangsbereich oder der zweite Zugangsbereich in einer Bearbeitungsposition relativ zu der mindestens einen Werkzeugspindel positionierbar. Dadurch lässt sich an der gleichen Maschine ohne Änderung der Aufspannung sowohl der erste Bearbeitungsvorgang als auch der zweite Bearbeitungsvorgang (zeitlich beabstandet) durchführen. Es ergibt sich dadurch eine zeiteffektive Bearbeitung.

Bei einer Ausführungsform weist der mindestens eine Werkstückträger mindestens eine Durchtrittsausnehmung für das zweite Werkzeug auf. Wenn das Werkstück von unten her bearbeitet werden soll, dann stellt die mindestens eine Durchtrittsausnehmung einen Zugriffsbereich des zweiten Werkzeugs an das Werkstück bereit.

Günstig ist es, wenn die mindestens eine Werkzeugspindel ein Werkzeug mit einem oder mehreren Werkzeugelemente aufweist, welche einfahrbar und ausfahrbar sind, wobei insbesondere eine Betätigung mittels mindestens einer Stange vorgesehen ist. Das oder die Werkzeugelemente sind beispielsweise Schneiden. Diese sind an dem Werkzeug angeordnet und sind in einer Querrichtung zu einer Längsachse der mindestens einen Werkzeugspindel beziehungsweise des Werkzeugs einfahrbar und ausfahrbar, das heißt ein Durchmesser des Werkzeugs im Bereich einer Schneide ist abhängig davon, ob eine solche Schneide als Werkzeugelement eingefahren oder ausgefahren ist. Dadurch ist es möglich, das Werkzeug in einem Teilbereich in eine Ausnehmung an einem bearbeiteten Werkstück einzutauchen, wobei in dieser Eintauchphase das oder die Werkzeugelemente eingefahren sind und der effektive Durchmesser des Werkzeugs minimiert ist. Nach einem Eintauchvorgang können dann das oder die Werkzeugelemente ausgefahren werden, um in einem inneren Hohlraum des Werkstücks eine Bearbeitung durchzuführen. Dadurch ist es beispielsweise möglich, durch eine lineare Rückwärtsverschiebung eine Bohrungsbearbeitung durchzuführen. Das Eintauchen in die Werkstückausnehmung ist eine Vorwärtsbewegung der Werkzeugspindel und die Bearbeitungsbewegung mit ausgefahrenen Schneiden als Werkzeugelemente ist eine Rückwärtsbewegung. Es ergibt sich dadurch eine zeitsparende Werkstückbearbeitung, da insbesondere das Werkzeug (die Werkzeugspindel) eine Querzustellbarkeit aufweist und kein Anheben oder Verschieben des Werkstücks als Ganzes notwendig ist. Es ergeben sich dadurch reduzierte Taktzeiten. Weiterhin ist auch ein konzentrisches Einfahren der Werkzeugspindel beziehungsweise des Werkzeugs in eine Ausnehmung und insbesondere Bohrung eines Werkstücks möglich. Es lässt sich dadurch beispielsweise eine Kurbelwellenbohrung bearbeiten.

Erfindungsgemäß wird ein Verfahren der eingangs genannten Art bereitgestellt, bei dem das Werkstück in einer Werkstückspannvorrichtung fixiert wird und ein erster Bearbeitungsvorgang mit einem ersten Werkzeug durchgeführt wird, wobei das erste Werkzeug an einem Gegenlager der Werkstückspannvorrichtung positioniert wird, und zeitlich getrennt von dem ersten Bearbeitungsvorgang ein zweiter Bearbeitungsvorgang an dem Werkstück mit einem zweiten Werkzeug durchgeführt wird, wobei das zweite Werkzeug gegenlagerfrei zu der Werkstückspannvorrichtung positioniert wird, und wobei das Werkstück sich für den ersten Bearbeitungsvorgang und den zweiten Bearbeitungsvorgang in der gleichen Aufspannung befindet, wobei nach Abschluss des ersten Bearbeitungsvorgangs die Werkstückspannvorrichtung als Ganzes verschwenkt wird, um das Werkstück zu dem zweiten Werkzeug für den zweiten Bearbeitungsvorgang zu positionieren, und/oder die Werkstückspannvorrichtung als Ganzes nach Abschluss des zweiten Bearbeitungsvorgangs verschwenkt wird, um das Werkstück zu dem ersten Werkzeug für den ersten Bearbeitungsvorgang zu positionieren. Dadurch lässt sich auf einfache Weise in der gleichen Aufspannung und an der gleichen Werkzeugmaschine eine Mehrzahl von Bearbeitungsvorgängen an dem gleichen Werkstück durchführen.

Der erste Bearbeitungsvorgang kann dabei zeitlich vor oder zeitlich nach dem zweiten Bearbeitungsvorgang erfolgen.

Die Vorteile des erfindungsgemäßen Verfahrens wurden bereits im Zusammenhang mit der erfindungsgemäßen Werkzeugmaschine erläutert.

Insbesondere ist der erste Bearbeitungsvorgang ein Kurbelwellenlagerbohrungs-Bearbeitungsvorgang und der zweite Bearbeitungsvorgang ist ein Zylinderbohrungs-Bearbeitungsvorgang, wobei diese Bearbeitungsvorgänge an einem Motorblock als Werkstück durchgeführt werden.

Günstig ist es, wenn das Werkstück in einer linearen Richtung in eine Aufnahme der Werkstückspannvorrichtung eingesetzt wird und in einer Gegenrichtung entnommen wird. Dadurch lässt sich das Beladen beziehungsweise das Entnehmen zeiteffektiv durchführen. Das Beladen und das Entnehmen wird durch ein Gegenlager für das zweite Werkzeug nicht behindert.

Bei einer Ausführungsform ist es vorgesehen, dass das erste Werkzeug mindestens ein dem Werkstück zustellbares Werkzeugelement aufweist, wobei das mindestens eine Werkzeugelement beim Eintauchen des ersten Werkzeugs in eine Ausnehmung des Werkstücks eingefahren ist und anschließend zur Werkstückbearbeitung ausgefahren wird, wobei insbesondere zur Werkstückbearbeitung das erste Werkzeug in Gegenrichtung zu einer Eintauchrichtung verschoben wird. Das mindestens eine Werkzeugelement ist beispielsweise eine Schneide. Wenn die Schneide eingefahren ist, dann lässt sich das Werkzeug mit einem Teilbereich in eine Ausnehmung und insbesondere Bohrung am Werkstück eintauchen und insbesondere lässt sich dann die Schneide durch den entsprechenden Werkstückbereich durchtauchen. Anschließend erfolgt dann eine Zustellung des mindestens einen Werkzeugelements an das Werkstück, so dass dessen Bearbeitung erfolgen kann. Beispielsweise wird dann das erste Werkzeug in einer Gegenrichtung zu einer Eintauchrichtung verschoben. Bei ausgefahrenem Werkzeugelement lässt sich dann die Bohrung bearbeiten.

Die nachfolgende Beschreibung bevorzugter Ausführungsformen dient im Zusammenhang mit den Zeichnungen der näheren Erläuterung der Erfindung. Es zeigen:
- Figur 1: eine schematische Teildarstellung eines Ausführungsbeispiels einer Werkzeugmaschine;
- Figur 2: eine Seitenansicht der Werkzeugmaschine gemäß Figur 1 (ohne Verkleidung);
- Figur 3: eine schematische Darstellung eines Motorblocks als Werkstück, wobei unterschiedliche Bearbeitungsvorgänge angedeutet sind;
- Figur 4: schematisch eine erste Möglichkeit einer Positionierung von Motorblöcken als Werkstücke an einem Werkstückträger;
- Figur 5: eine andere Möglichkeit der Positionierung von Motorblöcken als Werkstücke an einem Werkstückträger;
- Figur 6: eine perspektivische Darstellung eines Ausführungsbeispiels einer erfindungsgemäßen Werkstückspannvorrichtung, wobei auch Werkzeuge, welche an einer Werkzeugspindel der Werkzeugmaschine gehalten sind, angedeutet sind;
- Figur 7: eine Hinteransicht der Werkstückspannvorrichtung gemäß Figur 6 in der Richtung F;
- Figur 8: eine Schnittansicht längs der Linie 8-8 gemäß Figur 7;
- Figur 9: eine Seitenansicht der Werkstückspannvorrichtung gemäß Figur 6 in der Richtung G;
- Figur 10: eine Draufsicht auf die Werkstückspannvorrichtung gemäß Figur 6;
- Figur 11: eine weitere perspektivische Ansicht der Werkstückspannvorrichtung gemäß Figur 6;
- Figur 12: eine weitere Schnittansicht ähnlich wie Figur 8, wobei in Figur 12 ein erstes Werkzeug gezeigt ist und in Figur 8 ein zweites Werkzeug;
- Figur 13: ein Ausführungsbeispiel eines Werkzeugs, welches bewegliche Schneiden aufweist und an einem Werkstück positioniert ist;
- Figur 14(a), (b), (c): die Sequenz der Positionierung des Werkzeugs gemäß Figur 13 an einem Werkstück;
- Figur 15: ein weiteres Ausführungsbeispiel eines Werkzeugs, welches an einem Werkstück positioniert ist; und
- Figur 16: eine Schnittansicht längs der Linie 16-16 gemäß Figur 15 in einer anderen Position des Werkzeugs.

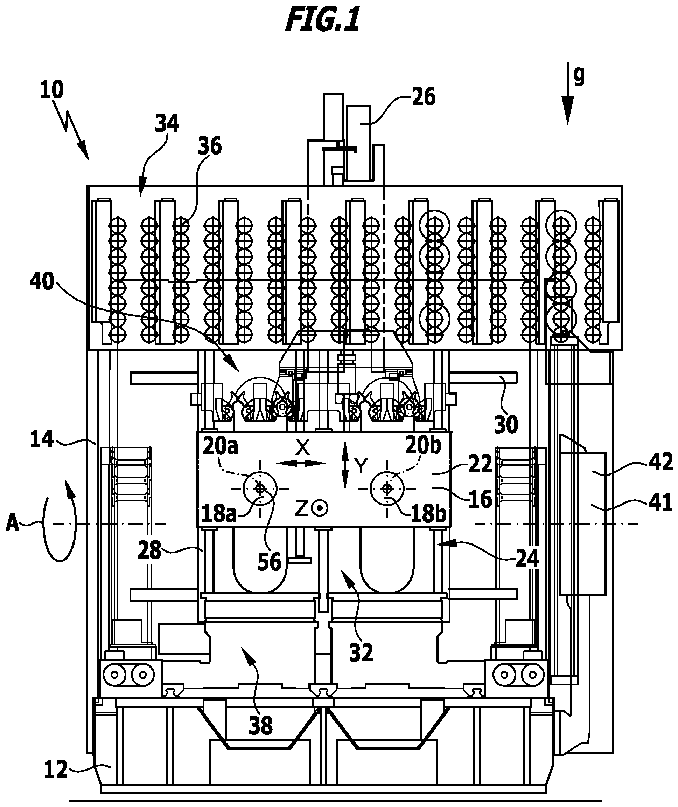

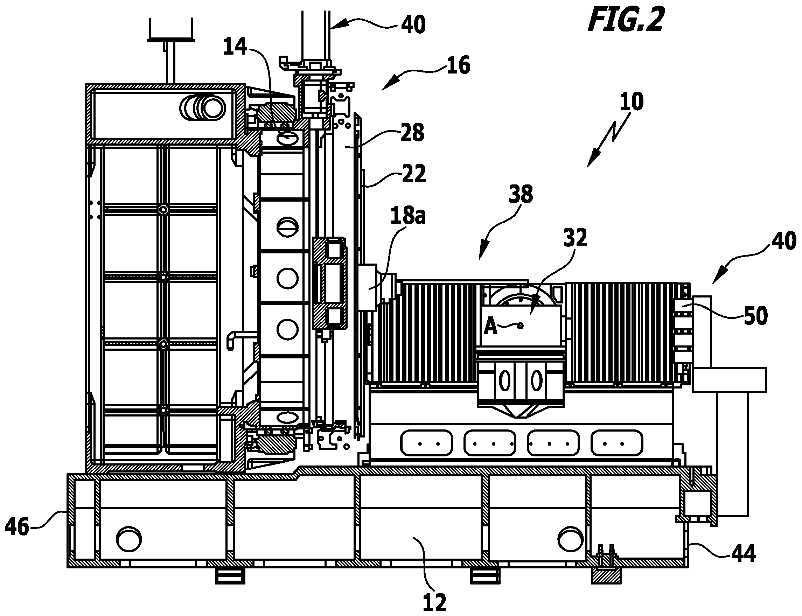

Ein Ausführungsbeispiel einer Werkzeugmaschine, an welcher eine erfindungsgemäße Werkstückspannvorrichtung einsetzbar ist, ist ein Bearbeitungszentrum. Eine Ausführungsform eines Bearbeitungszentrums, welches in den Figuren 1 und 2 in Teildarstellung schematisch gezeigt und dort mit 10 bezeichnet ist, umfasst ein Maschinenbett 12, an welchem ein Maschinengestell 14 angeordnet ist. Das Maschinengestell 14 ist portalartig ausgebildet und ragt in einer bezogen auf die Schwerkraftrichtung g vertikalen Richtung über das Maschinenbett 12 hinaus. An dem Maschinengestell 14 ist eine Werkzeugträgereinrichtung 16 gehalten, welche mindestens eine Werkzeugspindel 18 umfasst.

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Bei der Darstellung gemäß Figur 1 liegen die Rotationsachsen 20a, 20b parallel zueinander. Sie sind parallel zu einer Z-Richtung orientiert, welche bei der Darstellung gemäß Figur 1 senkrecht zur Zeichenebene liegt. Die Z-Richtung ist bezogen auf die Schwerkraftrichtung g insbesondere eine horizontale Richtung.

Die Werkzeugträgereinrichtung 16 ist als Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Der Werkstückträger oder ein Werkstückhaltebereich davon ist um eine Achse (A-Achse) schwenkbar, welche bezogen auf die Schwerkraftrichtung g eine horizontale Achse ist. Alternativ oder zusätzlich kann der Werkstückträger 32 (oder ein Teil davon) um eine vertikale Achse (B-Achse) schwenkbar sein.
Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.
Bei einem alternativen Ausführungsbeispiel sind die erste Werkzeugspindel 18a und die zweite Werkzeugspindel 18b verschieblich an der Werkzeugträgereinrichtung 16 gehalten, um eine Z-Verschieblichkeit zu ermöglichen.
Es ist auch möglich, eine Z-Verschieblichkeit der Werkzeugspindeln 18a, 18b an der Werkzeugträgereinrichtung 16 und eine Z-Verschieblichkeit des Werkstückträgers 32 an dem Maschinenbett zu kombinieren.
Es kann beispielsweise auch vorgesehen sein, dass der Werkstückträger 32 um eine beispielsweise vertikale Achse drehbar ist.
Bei dem gezeigten Ausführungsbeispiel weist das Bearbeitungszentrum 10 eine Lagereinrichtung 34 für Werkzeuge 36 auf, welche oberhalb eines Arbeitsraums 38, in welchem Werkstücke bearbeitet werden, angeordnet ist.
Ferner ist eine Werkzeugwechseleinrichtung 40 vorgesehen, über welche Werkzeuge 36 an die Werkzeugspindeln 18a und 18b einsetzbar sind und von dieser entnehmbar sind.
Ein entsprechendes Bearbeitungszentrum ist beispielsweise in der WO 2009/033920 A1 beschrieben.

Das Bearbeitungszentrum 10 kann auch nur eine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Bei einem Ausführungsbeispiel sind an der Vorderseite 44 eine oder mehrere Zusatzeinrichtungen 48 angeordnet. Über eine Zusatzeinrichtung 48 kann auf ein Werkstück zusätzlich zu Werkzeugen an Werkzeugspindeln 18 eingewirkt werden.

Bei einem Ausführungsbeispiel ist als Zusatzeinrichtung 48 eine Reinigungseinrichtung 50 vorgesehen. Ein Werkstück ist über den Werkstückträger 32 zu der Reinigungseinrichtung 50 verfahrbar. Dort kann das Werkstück beispielsweise nach einem ersten Bearbeitungsvorgang vor einem zweiten Bearbeitungsvorgang gereinigt werden. Dadurch lässt sich die Bearbeitungsqualität verbessern. Die Reinigung erfolgt beispielsweise durch Anblasen oder durch direkte Einwirkung einer Reinigungseinrichtung.

Die Zusatzeinrichtung 48 kann beispielsweise auch durch eine Fluidstrahleinrichtung gebildet sein oder eine solche umfassen. Durch die Fluidstrahleinrichtung lässt sich ein Werkstück mit dem Fluidstrahl beaufschlagen. Der Fluidstrahl kann ein Gasstrahl und/oder Flüssigkeitsstrahl sein. Bei entsprechender Ausbildung lässt sich dadurch beispielsweise ein Fluidstrahl-Honvorgang durchführen.

Es kann beispielsweise alternativ oder zusätzlich vorgesehen sein, dass die Zusatzeinrichtung 48 durch eine Lasereinrichtung gebildet ist oder eine solche umfasst. Dadurch ist es beispielsweise möglich, eine Laserstrukturierbearbeitung eines Werkstücks durchzuführen.

Die Zusatzeinrichtung 48 oder die Zusatzeinrichtungen 48 sind an einem Rand des Arbeitsraums 38 z. B. an der Vorderseite 44 angeordnet, so dass eine Zusatzeinrichtung 48 die relative Beweglichkeit zwischen dem Werkstückträger 32 und den Werkzeugspindeln 18a, 18b nicht behindert.

Ein Ausführungsbeispiel einer Werkzeugspindel umfasst eine Schnittstelle an ein Werkzeug. Die Schnittstelle ist beispielsweise als Hohlkegelschaft (HSK)-Schnittstelle ausgebildet. An der Schnittstelle ist ein Werkzeug 56 in die Werkzeugspindel einsetzbar und mit dieser lösbar fixierbar. Die Fixierung ist dabei drehfest, so dass bei der Rotation eines entsprechenden rotierbaren Teils der Werkzeugspindel um beispielsweise die Rotationsachse 20a das Werkzeug mitrotiert wird.

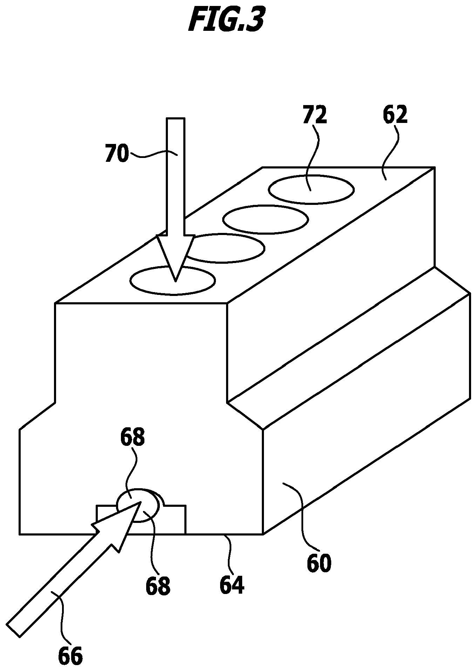

Durch die Werkzeugmaschine 10 lässt sich ein Motorblock 60 (Figur 3) als Werkstück bearbeiten. Der Motorblock 60 weist eine Zylinderkopfseite 62 und eine gegenüberliegende Ölwannenseite 64 auf. In den Motorblock 60 wird in einem ersten Bearbeitungsvorgang an einer Bohrung 68' eine Kurbelwellenlagerbohrung 68 hergestellt beziehungsweise bearbeitet. In einem zweiten Bearbeitungsvorgang 70 werden Zylinderbohrungen 72 hergestellt. Für den ersten Bearbeitungsvorgang 66 wird dabei an die jeweilige Werkzeugspindel 18a, 18b ein erstes Werkzeug eingesetzt, welches dann den ersten Bearbeitungsvorgang 66 durchführt. Für den zweiten Bearbeitungsvorgang 70 wird an der jeweiligen Werkzeugspindel 18a, 18b ein zweites Werkzeug eingesetzt, welches dann den zweiten Bearbeitungsvorgang 70 durchführt.

Der erste Bearbeitungsvorgang 66 und der zweite Bearbeitungsvorgang 70 werden zeitlich nacheinander durchgeführt, wobei der erste Bearbeitungsvorgang 66 zeitlich vor dem zweiten Bearbeitungsvorgang 70 durchgeführt werden kann oder zeitlich nach dem zweiten Bearbeitungsvorgang 70 durchgeführt werden kann.

Zur Fixierung des Motorblocks 60 als Werkstück an dem Werkstückträger 32 wird, wie unten noch näher beschrieben, eine erfindungsgemäße Werkstückspannvorrichtung eingesetzt.

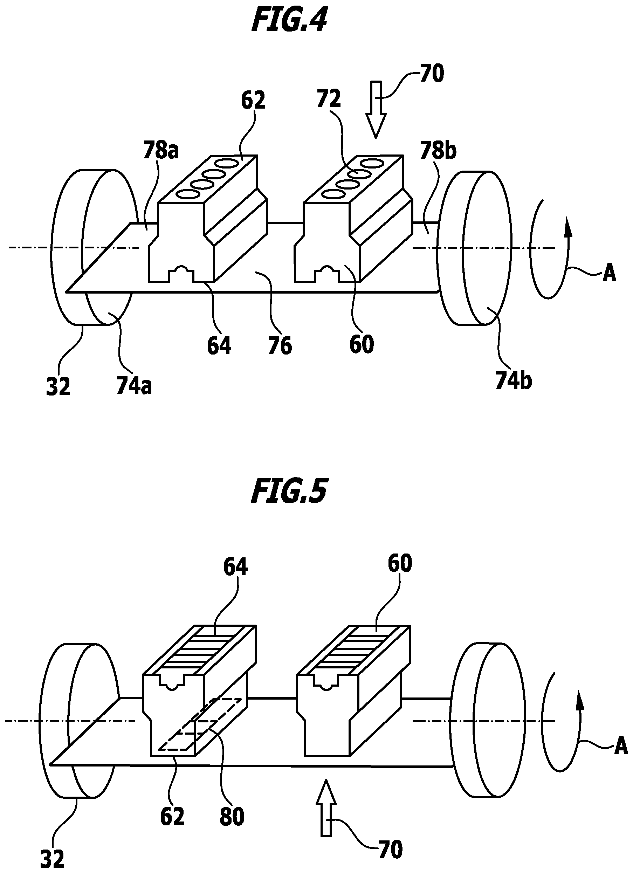

Bei einem Ausführungsbeispiel, bei dem die Werkzeugmaschine 10 ein Doppelspindler ist mit erster Werkzeugspindel 18a und zweiter Werkzeugspindel 18b, werden vorzugsweise gleichzeitig oder kurz nacheinander zwei Motorblöcke 60 bearbeitet und entsprechend sind dann zwei Motorblöcke 60 (vgl. Figuren 4 und 5) an dem Werkstückträger 32 positioniert. Es können dabei grundsätzlich zwei getrennte Werkstückspannvorrichtungen vorgesehen sein, oder es kann beispielsweise, wie untenstehend noch näher erläutert wird, eine Werkstückspannvorrichtung vorgesehen sein, welche zwei Aufnahmeplätze für jeweils einen ersten Motorblock und einen zweiten Motorblock umfasst.

Es ist dabei ferner möglich, dass die entsprechende Werkstückspannvorrichtung (oder die entsprechenden Werkstückspannvorrichtungen) fest an dem Werkstückträger 32 angeordnet sind. Eine Beladung der Werkzeugmaschine 10 mit Werkstücken 60 erfolgt dann als Beladung der entsprechenden Werkstückspannvorrichtung oder Werkstückspannvorrichtungen an dem Werkstückträger 32. Entsprechend erfolgt auch die Entladung.

Bei einer alternativen Ausführungsform ist beziehungsweise sind die Werkstückspannvorrichtungen lösbar an dem Werkstückträger 32 fixierbar. Eine Beladung beziehungsweise Entladung einer Werkstückspannvorrichtung kann dann außerhalb der Werkzeugmaschine 10 erfolgen. Eine beladene Werkstückspannvorrichtung wird an dem Werkstückträger 32 fixiert. Die Werkzeugmaschine 10 wird dann gewissermaßen mit einer Werkstückspannvorrichtung beladen. Zur Entladung wird die Werkstückspannvorrichtung von dem Werkstückträger 32 gelöst und die Werkstück-Entladung erfolgt dann außerhalb der Werkzeugmaschine 10.

Bei einem Ausführungsbeispiel umfasst der Werkstückträger 32 einen ersten Werkstückschlitten 74a und einen zweiten Werkstückschlitten 74b (Figur 4). Diese Werkstückschlitten sind jeweils insbesondere in der Z-Richtung relativ zum Maschinengestell 14 verschieblich. Es ist eine Verbindungseinrichtung 76 vorgesehen, welche die beiden Werkstückschlitten 74a und 74b verbindet. An der Verbindungsrichtung 76 sind das oder die Werkstücke (über die Werkstückspannvorrichtung) fixierbar. Die Verbindungseinrichtung 76 bildet eine Brücke zwischen dem ersten Werkstückschlitten 74a und dem zweiten Werkstückschlitten 74b.
Es ist dabei möglich, dass die Verbindungseinrichtung eine Klemmeinrichtung aufweist, durch welche ein erstes Brückenelement 78a, welches an dem ersten Werkstückschlitten 74a gehalten ist, und ein zweites Brückenelement 78b, welches an dem zweiten Werkstückschlitten 74b gehalten ist, miteinander klemmbar sind, wobei diese Verbindung lösbar ist.
Wenn das erste Brückenelement 78a und das zweite Brückenelement 78b miteinander verbunden (miteinander verklemmt sind), so lässt sich die Verbindungseinrichtung 76 als Ganzes (und damit auch darauf positionierte Werkstücke 60) beispielsweise um die Achse A schwenken.
Für einen Motorblock 60 gibt es im Wesentlichen zwei verschiedene Möglichkeiten der Fixierung an dem Werkstückträger 32.
Bei einem Ausführungsbeispiel (Figur 4) ist ein Motorblock 60 über die Ölwannenseite 64 auf den Werkstückträger 32 (in dem vorliegenden Falle auf die Verbindungseinrichtung 76) aufgesetzt. Bei einer alternativen Ausführungsform (Figur 5) ist ein Motorblock 60 als Werkstück über die Zylinderkopfseite 62 auf den Werkstückträger 32 (auf die Verbindungseinrichtung 76) aufgesetzt.

Wenn der Motorblock 60 auf die Ölwannenseite 64 aufgesetzt ist, dann kann der zweite Bearbeitungsvorgang 70 (vgl. Figur 4) zur Herstellung der Zylinderbohrungen 72 von einer Seite her erfolgen, welche durch die Verbindungseinrichtung 76 nicht behindert ist.

Im Falle, dass ein Motorblock 60 auf die Zylinderkopfseite 62 aufgesetzt ist, erfolgt der zweite Bearbeitungsvorgang 70 von einer Seite her, welche grundsätzlich durch die Verbindungseinrichtung 76 gesperrt ist. Es sind deshalb an der Verbindungseinrichtung 76 ein oder mehrere Ausnehmungen 80 angeordnet (in Figur 5 angedeutet), durch welche das zweite Werkzeug durchtauchen kann, um den zweiten Bearbeitungsvorgang 70 an dem Motorblock 60 durchzuführen.

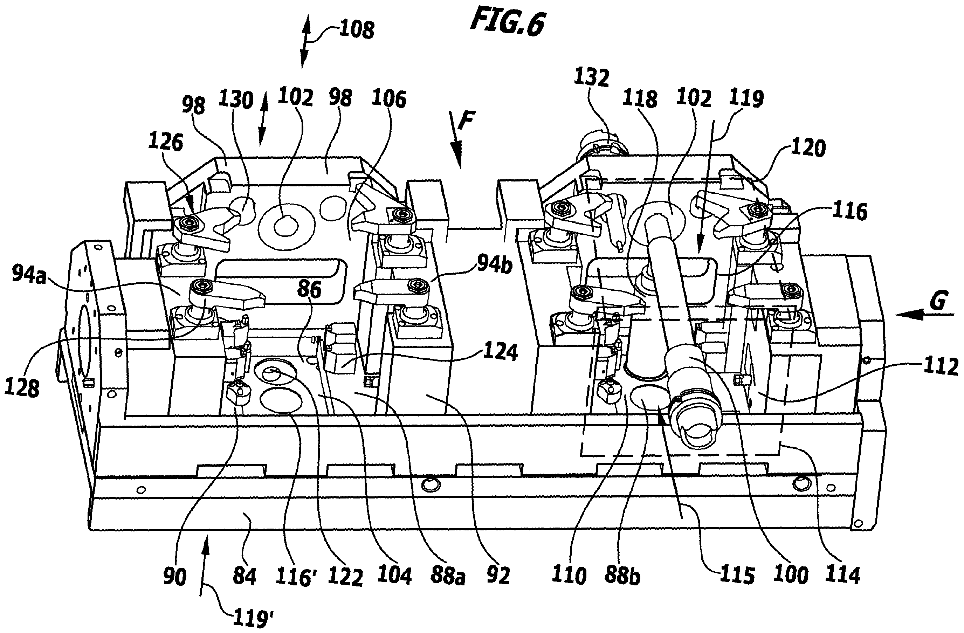

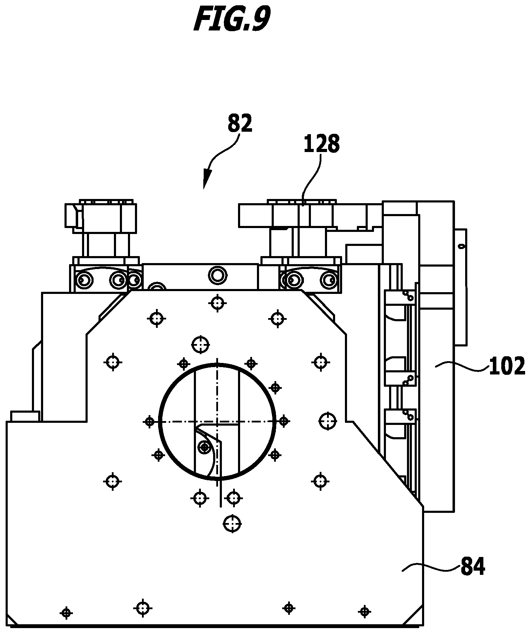

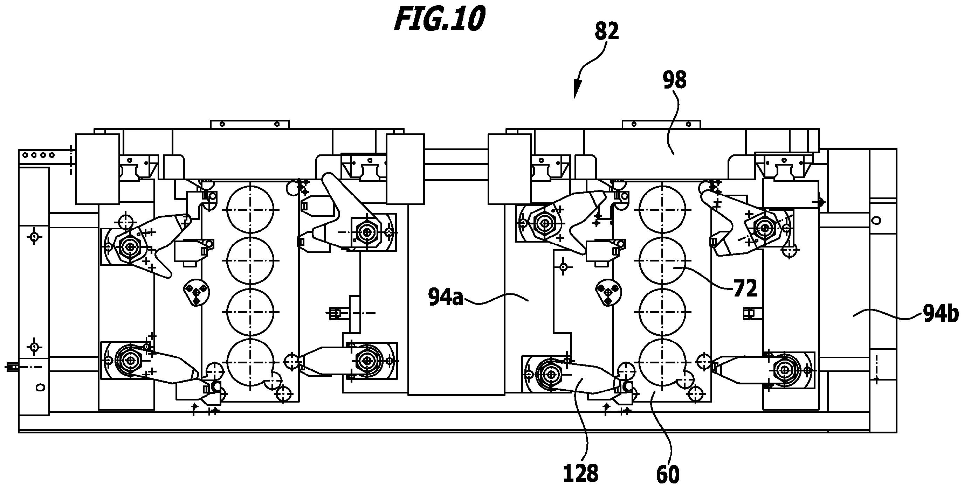

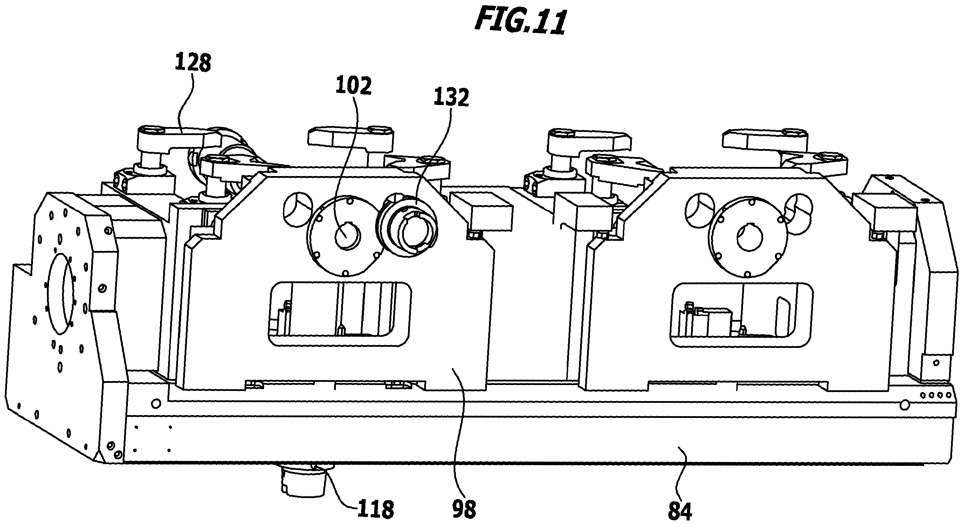

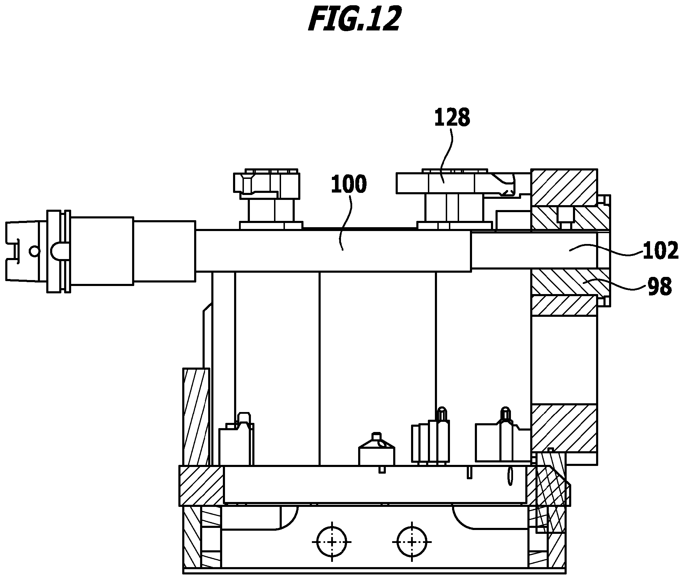

Zur Fixierung eines oder mehrerer Werkstücke (Motorblöcke 60) an dem Werkstückträger 32 ist eine Werkstückspannvorrichtung vorgesehen, von der ein Ausführungsbeispiel in den Figuren 6 bis 12 gezeigt ist und welches mit 82 bezeichnet ist. Die Werkstückspannvorrichtung 82 ist dabei so ausgebildet, dass eine Einspannung eines Werkstücks 60 nicht geändert werden muss, wenn nach dem ersten Bearbeitungsvorgang 66 der zweite Bearbeitungsvorgang 70 durchgeführt werden soll beziehungsweise nach dem zweiten Bearbeitungsvorgang 70 der erste Bearbeitungsvorgang 66 durchgeführt werden soll.

Die Werkstückspannvorrichtung 82 umfasst eine Basis 84, über welche sie an dem Werkstückträger 32 (insbesondere der Verbindungseinrichtung 76) fixiert beziehungsweise fixierbar ist. Wie oben erwähnt, kann dabei die Werkstückspannvorrichtung 82 fest an dem Werkstückträger 32 angeordnet sein oder lösbar angeordnet sein.

Die Werkstückspannvorrichtung 82 umfasst (mindestens eine) Aufnahme 86 für ein Werkstück. Bei einem Ausführungsbeispiel umfasst die Werkstückspannvorrichtung 82 eine Mehrzahl von Aufnahmen 88a, 88b, für eine Mehrzahl von Werkstücken 60. Beispielsweise entspricht die Anzahl der Aufnahmen der Anzahl der Werkzeugspindeln 18a, 18b der Werkzeugmaschine 10.

Eine Aufnahme hat einen Aufnahmeboden 90 und eine Wandung 92 ragt über den Aufnahmeboden 90 hinaus. Die Wandung 92 wiederum umfasst dabei gegenüberliegende Seitenwände 94a, 94b. Zwischen den Seitenwänden 94a, 94b ist ein Wandbereich 96 angeordnet, welcher ebenfalls über den Aufnahmeboden 90 hinausragt. Dieser Wandbereich 96 ist als Gegenlager 98 für das erste Werkzeug (in Figur 6 mit 100 angedeutet) ausgebildet.

Das Gegenlager 98 weist dabei eine Eintauchausnehmung 102 auf, in welche das erste Werkzeug 100 eintauchbar ist, um eben ein Gegenlager 98 für das erste Werkzeug 100 bei der Werkstückbearbeitung bereitzustellen.

Durch die Wandung 92 mit den Seitenwänden 94a, 94b und das Gegenlager 98 ist ein Aufnahmeraum 104 gebildet. Dieser Aufnahmeraum 104 hat eine Öffnung 106. Diese Öffnung 106 ist mindestens näherungsweise parallel zu dem Aufnahmeboden 90 orientiert. Ihr ist eine lineare Richtung/Gegenrichtung 108 zugeordnet. Diese lineare Richtung/Gegenrichtung 108 ist quer und insbesondere senkrecht zu dem Aufnahmeboden 90 beziehungsweise der Basis 84 orientiert. Über die lineare Richtung 108 lässt sich ein Werkstück 60 in die Aufnahme 86 einsetzen und in der entsprechenden Gegenrichtung lässt es sich dann aus der Aufnahme 86 entnehmen.

Der Aufnahme 86 ist ein erster Zugangsbereich 110 zugeordnet. Über den ersten Zugangsbereich 110 lässt sich der erste Bearbeitungsvorgang an dem Motorblock 60 durchführen. Dazu ist gegenüberliegend dem Gegenlager 98 ein Freiraum 112 gebildet, durch welchen das erste Werkzeug 100 durchtauchen kann und damit auch in das Gegenlager 98 eintauchen kann (vgl. Figur 6, rechte Seite).

Der erste Zugangsbereich 110 hat eine Querschnittsfläche 114 (vgl. Figur 6), welche quer und insbesondere senkrecht zu der Öffnung 106 orientiert ist; eine Normale der Querschnittsfläche 114 ist quer zu der linearen Richtung/Gegenrichtung 108 und insbesondere senkrecht zu dieser. Die Querschnittsfläche 114 ist insbesondere mindestens näherungsweise parallel zu dem Gegenlager 98 ausgerichtet. Dem ersten Zugangsbereich 110 ist eine erste Richtung 115 zugeordnet. Diese liegt senkrecht zur Querschnittsfläche 114 und ist eine Zuführungsrichtung für das erste Werkzeug 100 (insbesondere zum Eintauchen in die Bohrung 68').

Der Aufnahme 86 ist ferner ein zweiter Zugangsbereich 116, 116' zugeordnet. Über den zweiten Zugangsbereich lässt sich der zweite Bearbeitungsvorgang mit einem zweiten Werkzeug 118 (in Figur 6 angedeutet) durchführen. Über den zweiten Zugangsbereich 116 können insbesondere Zylinderbohrungen bearbeitet werden.

Wenn das Werkstück (der Motorblock 60) mit der Ölwannenseite 64 nach unten angeordnet ist, dann ist der zweite Zugangsbereich 116 der Bereich an der Öffnung 106. Eine Querschnittsfläche 120 des zweiten Zugangsbereichs 116 ist dann quer und insbesondere mindestens näherungsweise senkrecht zu dem Gegenlager 98. Die Querschnittsfläche 120 liegt mindestens näherungsweise parallel zu der Öffnung 106. Von oben her lässt sich auf den Motorblock 60 zugreifen, um den zweiten Bearbeitungsvorgang mit dem zweiten Werkzeug 118 durchführen zu können.

Wenn der Motorblock 60 über die Zylinderkopfseite 62 aufgelegt ist, dann liegt der zweite Zugangsbereich 116' unterhalb des Aufnahmebodens 90. Dieser ist mit einer oder mehreren Ausnehmungen 122 versehen, durch welche hindurch das zweite Werkzeug 118 auf das Werkstück 60 zugreifen kann.

Dem zweiten Zugangsbereich 116, 116' ist eine zweite Richtung 119 beziehungsweise 119' zugeordnet. Diese liegt senkrecht zur Querschnittsfläche 120.

Die Werkstückspannvorrichtung 82 ist für das zweite Werkzeug 118 gegenlagerfrei ausgebildet; es ist kein Gegenlager für das zweite Werkzeug 118 vorhanden, welches einen Zugang für eine Werkstückbearbeitung beziehungsweise für das Beladen und Entladen des Werkstücks an der Werkstückspannvorrichtung 82 behindert.

An der Aufnahme 86 sind Anlageelemente 124 für das Werkstück 60 angeordnet, an welchen das Werkstück 60 einspannbar ist. Es ist eine Spanneinrichtung 126 vorgesehen, durch welche das Werkstück axial (bezogen auf die Richtung/Gegenrichtung 108) einspannbar und damit in der Aufnahme 86 fixierbar ist.

Die Spanneinrichtung 126 umfasst bei einem Ausführungsbeispiel Schwenkelemente 128, welche an den Seitenwänden 94a, 94b angeordnet sind. Die Schwenkelemente 128 sind so verschwenkbar, dass die Öffnung 106 freigegeben ist und das Werkstück 60 von oben her in der Richtung 108 einsetzbar ist beziehungsweise in der Gegenrichtung entnehmbar ist. Die Schwenkelemente sind dabei ferner so verschwenkbar, dass sie nach Einsetzen des Werkstücks 60 über dieses bringbar sind, um für eine axiale Verspannung zu sorgen.

Die Aufnahme 86 mit den Anlageelementen 124 ist insbesondere so ausgebildet, dass in Querrichtung zur axialen Richtung eine formschlüssige Positionierung des Werkstücks 60 in der Aufnahme 86 ermöglicht ist.

Es kann vorgesehen sein, dass insbesondere in dem Gegenlager 98 ein oder mehrere Ausnehmungen 130 angeordnet sind, durch welche hindurch Fixierungselemente 132 in entsprechende Fixierungsausnehmungen des Werkstücks 60 eintauchbar sind, um für eine zusätzliche Fixierung beziehungsweise Verspannung zu sorgen.

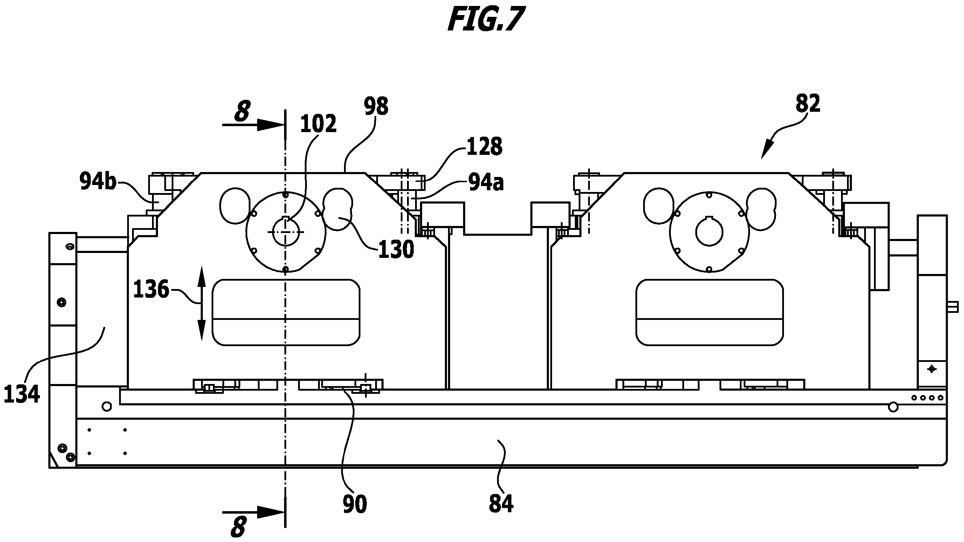

Bei einem Ausführungsbeispiel umfasst die Werkstückspannvorrichtung 82 der entsprechenden Aufnahme 86 zugeordnet eine Höhenverstelleinrichtung 134 (vgl. Figur 7). Durch die Höhenverstelleinrichtung ist eine Höhenposition des Gegenlagers 98 relativ zu dem Aufnahmeboden 90 in einer Richtung/Gegenrichtung 136 einstellbar. Dadurch ist eine individuelle Anpassung an Werkstücke 60 an der Aufnahme 86 möglich.

Die Richtung/Gegenrichtung 136 ist dabei insbesondere parallel zu der linearen Richtung/Gegenrichtung 108.

Wenn eine Mehrzahl von Aufnahmen 86 vorgesehen ist, dann sind die anderen Aufnahmen grundsätzlich gleich ausgebildet wie oben beschrieben.

Die Bearbeitung erfolgt wie folgt:
Ein Werkstück oder mehrere Werkstücke werden in die Werkstückspannvorrichtung 82 eingesetzt. Das Einsetzen erfolgt dabei von oben in der Richtung 108. Das oder die Werkstücke werden durch die wenigen Spanneinrichtungen 126 gespannt.

Der Werkstückträger 32, an dem die Werkstückspannvorrichtung 82 fixiert ist, wird bezüglich der oder den Werkzeugspindeln 18a, 18b ausgerichtet. Wenn der erste Bearbeitungsvorgang 66 durchgeführt wird, dann wird das erste Werkzeug 100 durch den ersten Zugangsbereich 110 durch die Bohrung 68', an welcher die Kurbelwellenlagerbohrung 68 hergestellt werden soll, durchgeführt und dabei in die Eintauchausnehmung 102 des Gegenlagers 98. Das erste Werkzeug 100 umfasst eine Zugstange oder Zug-Druck-Stange, welche auf eine oder mehrere Schieber wirkt. Bei der Werkstückbearbeitung werden diese Schieber, welche mit einer Schneide versehen sind oder auf eine Schneide wirken, dem Werkstück zugestellt in einer Richtung quer zu einer Rotationsrichtung dieser Schneiden.

Bezüglich eines Werkzeugs mit einer Zug-Druck-Stange vergleiche beispielsweise die DE 10 2010 039 096 A1, auf die ausdrücklich Bezug genommen wird.

Nach Beendigung des ersten Bearbeitungsvorgangs werden die Schneiden (Schieber) zurückgeführt, so dass das erste Werkzeug 100 aus dem Werkstück austauchbar ist.

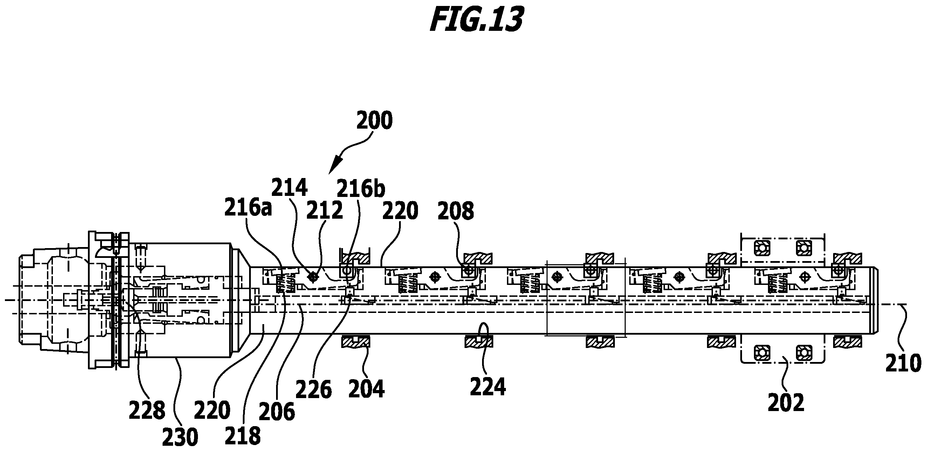

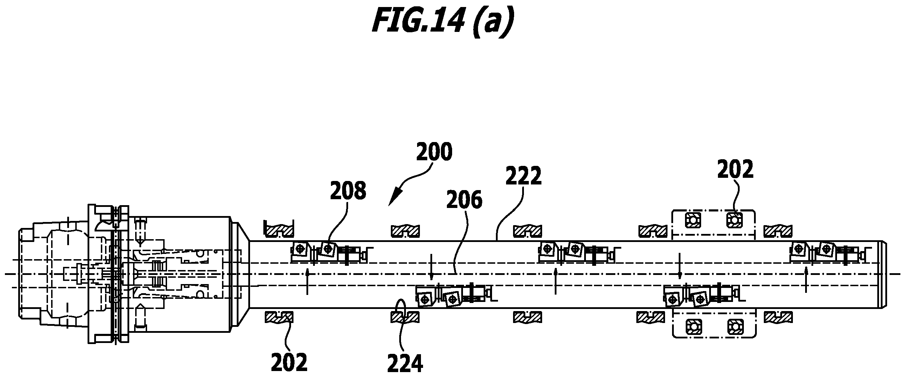

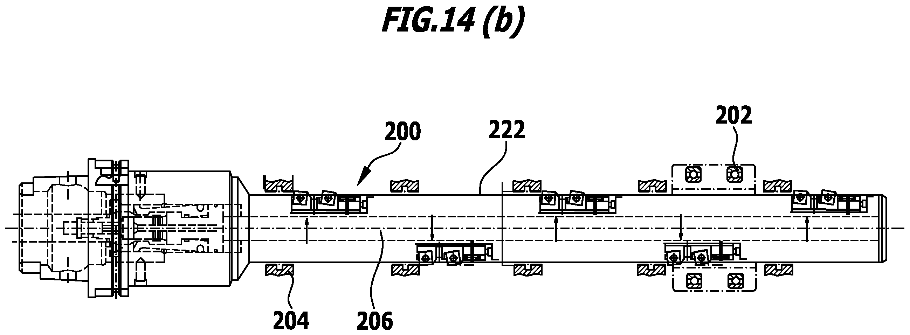

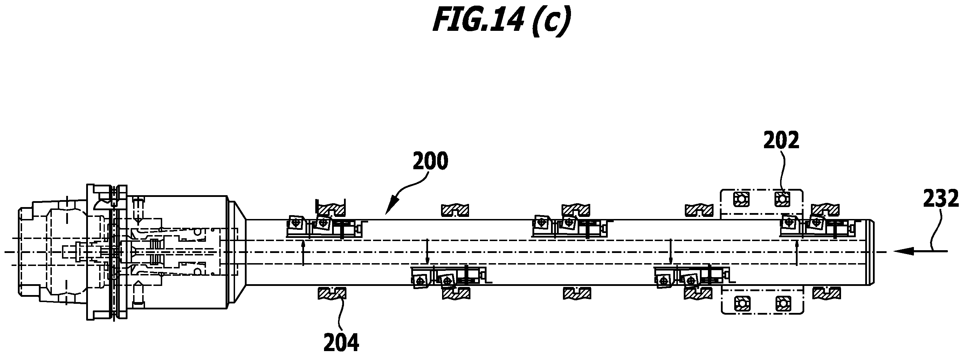

Bei einem Ausführungsbeispiel eines Werkzeugs für eine Werkzeugspindel 18a, 18b, welches in den Figuren 13, 14(a), (b) und (c) gezeigt und dort mit 200 bezeichnet ist, ist ein Gegenlager 202 vorgesehen. Bei dem gezeigten Ausführungsbeispiel ist dieses Gegenlager 202 innerhalb eines Werkstücks 204 (wie in den Figuren 13 und 14 nur teilweise angedeutet) angeordnet.

Das Werkzeug 200 sitzt an einer Werkzeugspindel. Es umfasst eine verschiebliche Stange 206. An diese verschiebliche Stange 206 sind Schneiden 208 gekoppelt. Bei einem Ausführungsbeispiel ist eine Mehrzahl von in einer Längsrichtung 210 des Werkzeugs beabstandete Schneiden 208 vorgesehen.

Eine (mindestens eine) Schneide 208 ist an einem Schwenkelement 212 angeordnet. Das Schwenkelement 212 ist schwenkbar an dem Werkzeug 200 gelagert. Eine Schwenkachse 214 ist quer und insbesondere senkrecht zu der Längsrichtung 210 orientiert. Das Schwenkelement 212 weist einen ersten Bereich 216a und einen zweiten Bereich 216b auf. Die Schwenkachse 214 liegt zwischen dem ersten Bereich 216a und dem zweiten Bereich 216b.

Der erste Bereich 216a ist über eine Feder 218 an einem Halteelement 220 des Werkzeugs 200 abgestützt. In dem Halteelement 220 ist auch die Stange 206 linear verschieblich geführt. An dem zweiten Bereich 216b sitzt die (mindestens eine) Schneide 208.

Die Feder 218 ist so ausgestaltet, dass sie das Schwenkelement 212, wenn keine Kraftbelastung auf den zweiten Bereich 216b wirkt, so positioniert, dass die Schneide 208 gegenüber einer äußeren Oberfläche 222 des Werkzeugs 200 zurückgesetzt ist oder höchstens eben mit dieser ist. In dieser Position ragt dann die Schneide 208 nicht über die äußere Oberfläche 222 hinaus und das Halteelement 220 kann in eine Ausnehmung 224 des Werkstücks 204 eingetaucht werden.

An der Stange 206 ist dem jeweiligen Schwenkelement 212 zugeordnet ein Betätigungselement 226 positioniert. Das Betätigungselement 226 ist mit der Stange 206 verschieblich. Das Betätigungselement kann dabei, wenn es entsprechend positioniert ist, auf den zweiten Bereich 216b wirken und entgegen der Kraft 218 das Schwenkelement 212 nach oben verschwenken, dass die Schneide 208 über die äußere Oberfläche 222 hinausragt (vgl. Figur 13). Diese entsprechende Position ist dann durch die Position der Stange 206 gehalten.

Durch eine Verschiebung der Stange 206 derart, dass das Betätigungselement 226 nicht mehr auf das Schwenkelement 212 wirkt, wird ein Verschwenken des Schwenkelements 212 nach unten bewirkt, so dass die Schneide 208 nicht mehr über die äußere Oberfläche 222 hinausragt.

Durch Positionierung der Stange 206 kann also eingestellt werden, ob die Schneiden 208 an dem Halteelement 220 über die äußere Oberfläche 222 hinausragen oder nicht.

Zur Bewegung und Positionierung der Stange 206 weist das Werkzeug 200 einen Antrieb 228 wie beispielsweise einen Elektromotor auf, welcher in einem Gehäuse 230 angeordnet ist. An dem Gehäuse 230 sitzt wiederum das Halteelement 220.

In Figur 14(a) ist eine Stellung der Stange 206 gezeigt, bei welcher die Schneiden 208 nicht über die äußere Oberfläche 222 hinausragen. Dadurch kann das Halteelement 220 mit den daran sitzenden Schneiden 208 in die Ausnehmung 224 eingetaucht werden und auch durch das Gegenlager 202 durchgeführt werden.

Nachdem dieser Vorgang abgeschlossen ist, wird durch entsprechende Linearverschiebung der Stange 206 ein Ausfahren und insbesondere Ausschwenken der Schneiden 208 über die äußere Oberfläche 222 bewirkt. Dadurch sind die Schneiden 208 in eine operative Stellung gebracht und durch Rotation des Halteelements 220 kann ein Werkstückbearbeitungsvorgang durchgeführt werden.

In Figur 14(c) ist ein Teil eines Bearbeitungsvorgangs angedeutet, bei dem das Halteelement 220 mit den Schneiden 208 in einer Richtung 232 verschoben wird, wobei eine Bohrungsbearbeitung erfolgt.

Das Werkzeug 200 weist eine Zustellbarkeit der Schneiden 208 auf. Die Schneiden 208 sind beim Einfahren des Werkzeugs 200 in die Ausnehmung 224 (Bohrung) des Werkstücks 204 eingefahren (eingesteuert). Zur rückwärtigen Bearbeitung bei einer Linearverschiebung des Werkzeugs 200 als Ganzes in der Richtung 232 sind die Schneiden 208 ausgefahren (ausgesteuert). Dadurch ist kein Anheben oder Verschieben des Werkstücks 204 notwendig.

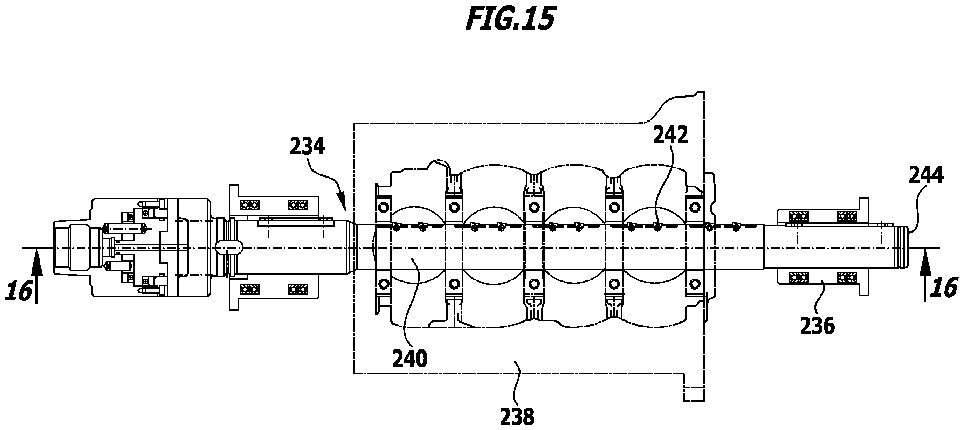

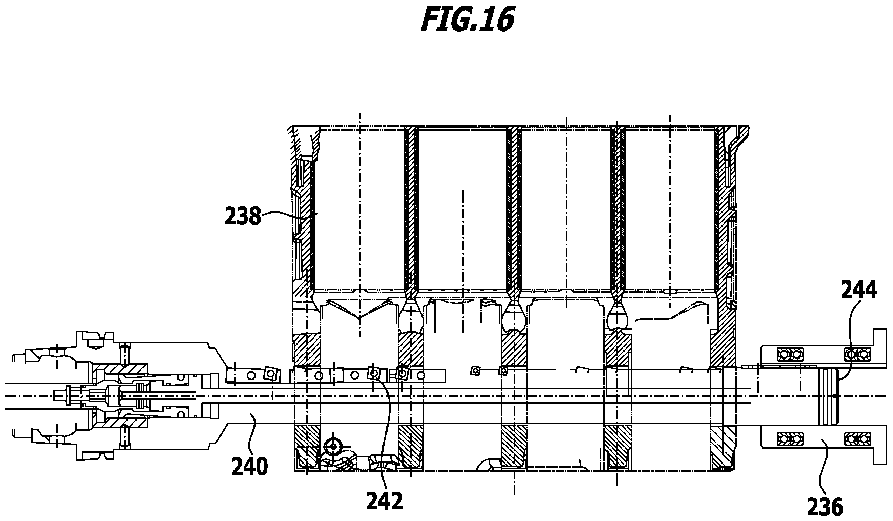

Bei einem weiteren Ausführungsbeispiel eines Werkzeugs 234 (Figuren 15 und 16) ist ein Gegenlager 236 außerhalb eines zu bearbeitenden Werkstücks 238 angeordnet.

Ein Halteelement 240 des Werkzeugs 234, welches Schneiden 242 hält, weist ein Ende 244 auf, welches außerhalb des Werkstücks 238 liegt; für einen Bearbeitungsvorgang ist das Halteelement 240 vollständig durch eine entsprechende Ausnehmung des Werkstücks 238 durchgetaucht und ragt im Bereich des Endes 244 über das Werkstück 238 hinaus.

Das Werkzeug 234 weist wiederum eine verschiebliche Stange zur Betätigung beziehungsweise Positionierung der Schneiden 242 auf. Diese Stange ist so positioniert, dass die Schneiden 242 für das Eintauchen des Halteelements 240 in die Bohrung des Werkstücks 238 eingefahren sind. Sie werden dann zur Werkstückbearbeitung ausgefahren (vgl. Figuren 15 und 16). In Figur 15 ist ein Anfangsvorgang der Werkstückbearbeitung gezeigt. Es erfolgt dann ein Rückwärtsfahren des Werkzeugs 234 zur Bohrungsbearbeitung an dem Werkstück.

Mit dem Werkzeug 200 oder 234 lässt sich auf vorteilhafte Weise eine Kurbelwellenbohrung bearbeiten.

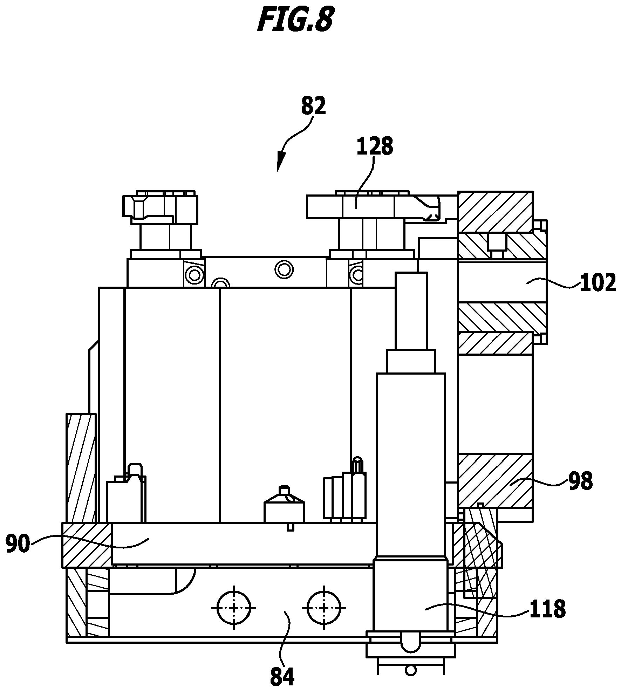

Anschließend wird, ohne die Aufspannung des Werkstücks bezüglich der Werkstückspannvorrichtung 82 und damit auch bezüglich des Werkstückträgers 32 zu ändern, die Werkstückspannvorrichtung 82 geschwenkt. Beispielsweise erfolgt diese Verschwenkung über den Werkstückträger 32 um die A-Achse. Die Verschwenkung erfolgt derart, dass das Werkstück 60 (über die Werkstückspannvorrichtung 82) zu dem zweiten Werkzeug 118 (vgl. beispielsweise Figur 8) positioniert wird. Insbesondere ist in der Zwischenzeit an der entsprechenden Werkzeugspindel das erste Werkzeug 100 durch das zweite Werkzeug 118 ersetzt worden. Die Werkstückspannvorrichtung 82 wird dabei so positioniert, dass über den zweiten Zugangsbereich 116 beziehungsweise 116' der zweite Bearbeitungsvorgang 70 an dem Werkstück 60 durchführbar ist.

Es erfolgt dann die entsprechende Bearbeitung der zweiten Bearbeitungsvorgänge 70, in dem insbesondere Zylinderbohrungen 72 bearbeitet werden.

Es ist dabei auch grundsätzlich möglich, dass zunächst der zweite Bearbeitungsvorgang 70 durchgeführt wird und dann die Werkstückspannvorrichtung 82 so verschwenkt wird, dass nach Abschluss des zweiten Bearbeitungsvorgangs 70 der erste Bearbeitungsvorgang 66 erfolgt.

Die Werkstückspannvorrichtung 82 ist bezüglich des zweiten Werkzeugs 118 gegenlagerfrei ausgebildet; es ist kein Gegenlager für das zweite Werkzeug vorgesehen.

Dadurch wird es ermöglicht, den ersten Bearbeitungsvorgang 66 und den zweiten Bearbeitungsvorgang 70 an dem Werkstück 60 durchzuführen, ohne dessen Aufspannung an der Werkstückspannvorrichtung 82 zu ändern. Ein eventuelles Gegenlager des zweiten Werkzeugs 118 behindert nicht den Zugang zum Werkstück. Ferner wird dadurch auch nicht das Beladen beziehungsweise Entladen eines Werkstücks an der Werkstückspannvorrichtung 82 behindert.

Es ergibt sich dadurch eine zeiteffektive Bearbeitung, da die Aufspannung nicht geändert werden muss. Ferner muss das zweite Werkzeug 118 nicht in ein Gegenlager eingefahren werden, so dass sich hier eine Zeitminimierung ergibt. Weiterhin lässt sich ein Werkstück auf einfache Weise an der Werkstückspannvorrichtung 82 beladen beziehungsweise entladen, so dass sich auch hier eine zeiteffektive Bearbeitung ergibt.

### Bezugszeichenliste

- 10: Bearbeitungszentrum
- 12: Maschinenbett
- 14: Maschinengestell
- 16: Werkzeugträgereinrichtung
- 18a: erste Werkzeugspindel
- 18b: zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Zusatzeinrichtung
- 50: Reinigungseinrichtung
- 56: Werkzeug
- 60: Motorblock
- 62: Zylinderkopfseite
- 64: Ölwannenseite
- 66: Erster Bearbeitungsvorgang
- 68: Kurbelwellenlagerbohrung
- 68': Bohrung
- 70: Zweiter Bearbeitungsvorgang
- 72: Zylinderbohrung
- 74a: Erster Werkstückschlitten
- 74b: Zweiter Werkstückschlitten
- 76: Verbindungseinrichtung
- 78a: Erstes Brückenelement
- 78b: Zweites Brückenelement
- 80: Ausnehmung
- 82: Werkstückspannvorrichtung
- 84: Basis
- 86: Aufnahme
- 88a: Aufnahme
- 88b: Aufnahme
- 90: Aufnahmeboden
- 92: Wandung
- 94a: Seitenwand
- 94b: Seitenwand
- 96: Wandbereich
- 98: Gegenlager
- 100: Erstes Werkzeug
- 102: Eintauchausnehmung
- 104: Aufnahmeraum
- 106: Öffnung
- 108: Lineare Richtung
- 110: Erster Zugangsbereich
- 112: Freiraum
- 114: Querschnittsfläche
- 115: Erste Richtung
- 116: Zweiter Zugangsbereich
- 116': Zweiter Zugangsbereich
- 118: Zweites Werkzeug
- 119: Zweite Richtung
- 119': Zweite Richtung
- 120: Querschnittsfläche
- 122: Ausnehmung
- 124: Anlageelement
- 126: Spanneinrichtung
- 128: Schwenkelement
- 130: Ausnehmung
- 132: Fixierungselement
- 134: Höhenverstelleinrichtung
- 136: Richtung/Gegenrichtung
- 200: Werkzeug
- 202: Gegenlager
- 204: Werkstück
- 206: Stange
- 208: Schneide
- 210: Längsrichtung
- 212: Schwenkelement
- 214: Schwenkachse
- 216a: Erster Bereich
- 216b: Zweiter Bereich
- 218: Feder
- 220: Halteelement
- 222: Äußere Oberfläche
- 224: Ausnehmung
- 226: Betätigungselement
- 228: Antrieb
- 230: Gehäuse
- 232: Richtung
- 234: Werkzeug
- 236: Gegenlager
- 238: Werkstück
- 240: Halteelement
- 242: Schneide
- 244: Ende

## Patentansprüche

1. Werkzeugmaschine, umfassend
mindestens eine Werkstückspannvorrichtung (82) und mindestens eine Werkzeugspindel (18a; 18b),
**dadurch gekennzeichnet,**
**dass** an mindestens einem Werkstückträger (32) die mindestens eine Werkstückspannvorrichtung (82) fest oder lösbar angeordnet ist, wobei die Werkstückspannvorrichtung (82) umfasst:
mindestens eine Aufnahme (86) für ein Werkstück (60), wobei die mindestens eine Aufnahme (86) eine Wandung (92) aufweist und eine Öffnung (106), über welche das Werkstück (60) in die Aufnahme (96) in einer linearen Richtung (108) einsetzbar ist und in einer Gegenrichtung entnehmbar ist,
eine Spanneinrichtung (126) zur Fixierung des Werkstücks (60) an der mindestens einen Aufnahme (86),
einen ersten Zugangsbereich (110), über den ein erstes Werkzeug (100) an dem Werkstück (60) für einen ersten Bearbeitungsvorgang (66) angreift,
ein Gegenlager (98) für das erste Werkzeug (100), und
einen zweiten Zugangsbereich (116; 116'), über den ein zweites Werkzeug (118) an dem Werkstück (60) für einen zweiten Bearbeitungsvorgang (70) angreift, wobei der erste Bearbeitungsvorgang (66) und der zweite Bearbeitungsvorgang (70) an unterschiedlichen Stellen des Werkstücks (60) mit unterschiedlichen Werkzeugen (100; 118) erfolgt und die Werkstückspannvorrichtung (82) gegenlagerfrei für das zweite Werkzeug (118) ist, und
**dass** der mindestens eine Werkstückträger (32) um mindestens eine Achse (A; B) schwenkbar ist.

2. Werkzeugmaschine nach Anspruch 1, **dadurch gekennzeichnet, dass** das Gegenlager (98) an der Wandung (92) der mindestens einen Aufnahme (86) angeordnet oder gebildet ist oder mindestens einen Teil der Wandung (92) bildet.

3. Werkzeugmaschine nach Anspruch 1 oder 2, **dadurch gekennzeichnet, dass** das Gegenlager (98) quer und insbesondere senkrecht zu der Öffnung (106) angeordnet ist und/oder das Gegenlager (98) einen Eintauchbereich (102) für das erste Werkzeug (100) aufweist.

4. Werkzeugmaschine nach einem der vorangehenden Ansprüche, **dadurch gekennzeichnet, dass** der erste Zugangsbereich (110) eine Querschnittsfläche (114) aufweist, welche quer zu der Öffnung (106) orientiert ist und/oder der erste Zugangsbereich (110) eine Querschnittsfläche (114) aufweist, welche mindestens näherungsweise parallel zu dem Gegenlager (98) orientiert ist und/oder dem ersten Zugangsbereich (110) eine lineare erste Richtung zugeordnet ist, welche eine Zuführrichtung oder Bearbeitungsrichtung des ersten Werkzeugs (100) ist, wobei die erste Richtung mindestens näherungsweise parallel oder in einem spitzen Winkel zu der Öffnung (106) orientiert ist.

5. Werkzeugmaschine nach einem der vorangehenden Ansprüche, **dadurch gekennzeichnet, dass** der zweite Zugangsbereich (116; 116') eine Querschnittsfläche (120) aufweist, welche parallel oder in einem spitzen Winkel kleiner 30° zu der Öffnung (106) liegt und/oder der zweite Zugangsbereich (116; 116') eine Querschnittsfläche (120) aufweist, welche quer zu dem Gegenlager (98) orientiert ist und/oder dem zweiten Zugangsbereich (116; 116') eine lineare zweite Richtung zugeordnet ist, welche eine Zuführungsrichtung oder Bearbeitungsrichtung des zweiten Werkzeugs (118) ist, wobei die zweite Richtung quer zu der Öffnung (106) orientiert ist.

6. Werkzeugmaschine nach einem der vorangehenden Ansprüche, **dadurch gekennzeichnet, dass** der erste Zugangsbereich (110) und der zweite Zugangsbereich (116; 116') so angeordnet und ausgebildet sind, dass ausgehend von einer Positionierung des ersten Zugangsbereichs (110) zu einem raumfesten Punkt der zweite Zugangsbereich (116; 116') durch eine Schwenkbewegung der Werkstückspannvorrichtung (82) als Ganzes zu diesem raumfesten Punkt positionierbar ist und/oder ausgehend von einer Positionierung des zweiten Zugangsbereichs (116) zu einem raumfesten Punkt der erste Zugangsbereich (110) durch eine Schwenkbewegung der Werkstückspannvorrichtung (82) als Ganzes zu diesem raumfesten Punkt positionierbar ist.

7. Werkzeugmaschine nach einem der vorangehenden Ansprüche, **gekennzeichnet durch** eine Höhenverstelleinrichtung (134), durch welche das Gegenlager (98) in seiner Höhenposition zu einem Aufnahmeboden (90) der mindestens einen Aufnahme (86) feststellbar einstellbar ist.

8. Werkzeugmaschine nach einem der vorangehenden Ansprüche, **dadurch gekennzeichnet, dass** ein Aufnahmeboden (90) mit mindestens einer Durchtrittsausnehmung (122) für das zweite Werkzeug (118) versehen ist.

9. Werkzeugmaschine nach einem der vorangehenden Ansprüche, **dadurch gekennzeichnet, dass** die mindestens eine Werkzeugspindel (18a; 18b) bezogen auf die Schwerkraftrichtung (g) horizontal ausgerichtet ist und/oder die mindestens eine Werkzeugspindel (18a; 18b) und der mindestens eine Werkstückträger (32) mindestens in drei linear unabhängigen Richtungen (X, Y, Z) relativ zueinander verschieblich sind.

10. Werkzeugmaschine nach einem der vorangehenden Ansprüche, **dadurch gekennzeichnet, dass** durch den mindestens einen Werkstückträger (32) über eine Schwenkbewegung wahlweise der erste Zugangsbereich (110) oder der zweite Zugangsbereich (116; 116') in einer Bearbeitungsposition relativ zu der mindestens einen Werkzeugspindel (18a; 18b) positionierbar sind.

11. Werkzeugmaschine nach einem der vorangehenden Ansprüche, **dadurch gekennzeichnet, dass** der mindestens eine Werkstückträger (32) mindestens eine Durchtrittsausnehmung (80) für das zweite Werkzeug (118) aufweist.

12. Werkzeugmaschine nach einem der vorangehenden Ansprüche, **dadurch gekennzeichnet, dass** die mindestens eine Werkzeugspindel (18a; 18b) ein Werkzeug (200) mit einem oder mehreren Werkzeugelementen (208) aufweist, welche einfahrbar und ausfahrbar sind, wobei insbesondere eine Betätigung mittels mindestens einer Stange (206) vorgesehen ist.

13. Verwendung der Werkzeugmaschine gemäß einem der vorangehenden Ansprüche zur Bearbeitung eines Motorblocks als Werkstück (60) mit einem Kurbelwellenlagerbohrungs-Bearbeitungsvorgang als erstem Bearbeitungsvorgang (66) und einem Zylinderbohrungs-Bearbeitungsvorgang als zweitem Bearbeitungsvorgang (70).

14. Verfahren zum Bearbeiten eines Werkstücks an einer Werkzeugmaschine, bei dem das Werkstück (60) in einer Werkstückspannvorrichtung (82) fixiert wird und ein erster Bearbeitungsvorgang (66) mit einem ersten Werkzeug (100) durchgeführt wird, wobei das erste Werkzeug (100) an einem Gegenlager (98) der Werkstückspannvorrichtung (82) positioniert wird, und zeitlich getrennt von dem ersten Bearbeitungsvorgang (66) ein zweiter Bearbeitungsvorgang (70) an dem Werkstück (60) mit einem zweiten Werkzeug (118) durchgeführt wird, wobei das zweite Werkzeug (118) gegenlagerfrei zu der Werkstückspannvorrichtung (82) positioniert wird, und wobei das Werkstück (60) sich für den ersten Bearbeitungsvorgang (66) und den zweiten Bearbeitungsvorgang (70) in der gleichen Aufspannung befindet, wobei nach Abschluss des ersten Bearbeitungsvorgangs (66) die Werkstückspannvorrichtung (82) als Ganzes verschwenkt wird, um das Werkstück (60) zu dem zweiten Werkzeug (118) für den zweiten Bearbeitungsvorgang (70) zu positionieren, und/oder die Werkstückspannvorrichtung (82) als Ganzes nach Abschluss des zweiten Bearbeitungsvorgangs (70) verschwenkt wird, um das Werkstück (60) zu dem ersten Werkzeug (100) für den ersten Bearbeitungsvorgang (66) zu positionieren.

15. Verfahren nach Anspruch 14, **dadurch gekennzeichnet, dass** der erste Bearbeitungsvorgang (66) ein Kurbelwellenlagerbohrungs-Bearbeitungsvorgang ist und der zweite Bearbeitungsvorgang (70) ein Zylinderbohrungs-Bearbeitungsvorgang ist, welche an einem Motorblock als Werkstück (60) durchgeführt werden.

16. Verfahren nach Anspruch 14 oder 15, **dadurch gekennzeichnet, dass** das Werkstück (60) in einer linearen Richtung in eine Aufnahme (86) der Werkstückspannvorrichtung (82) eingesetzt wird und in einer Gegenrichtung entnommen wird.

17. Verfahren nach einem der Ansprüche 14 bis 16, **dadurch gekennzeichnet, dass** das erste Werkzeug (100) mindestens ein dem Werkstück (60) zustellbares Werkzeugelement aufweist, wobei das mindestens eine Werkzeugelement beim Eintauchen des ersten Werkzeugs (100) in eine Ausnehmung des Werkstücks (60) eingefahren ist und anschließend zur Werkstückbearbeitung ausgefahren wird, wobei insbesondere zur Werkstückbearbeitung das erste Werkzeug (100) in Gegenrichtung zu einer Eintauchrichtung verschoben wird.

## Claims

1. Machine tool, comprising
at least one workpiece clamping apparatus (82) and at least one tool spindle (18a, 18b)
**characterized in**
**that** the at least one workpiece clamping apparatus (82) is fixedly or releasably arranged on at least one workpiece carrier (32), the workpiece clamping apparatus (82) comprising:
at least one receptacle (86) for a workpiece (60), wherein the at least one receptacle (86) comprises a wall (92) and an opening (106) via which the workpiece (60) is insertable into the receptacle (96) in a linear direction (108) and removable therefrom in a counter-direction,
a clamping device (126) for fixing the workpiece (60) in the at least one receptacle (86),
a first access area (110) via which a first tool (100) engages the workpiece (60) for a first machining operation (66),
a counter-bearing (98) for the first tool (100), and
a second access area (116, 116') via which a second tool (118) engages the workpiece (60) for a second machining operation (70), wherein the first machining operation (66) and the second machining operation (70) are performed at different locations on the workpiece (60) using different tools (100, 118), and wherein the workpiece clamping apparatus (82) is free of a counter-bearing for the second tool (118), and
**that** the at least one workpiece carrier (32) is pivotable about at least one axis (A, B).

2. Machine tool as claimed in claim 1, **characterized in that** the counter-bearing (98) is arranged or formed at the wall (92) of the at least one receptacle (86) or forms at least part of said wall (92).

3. Machine tool as claimed in claim 1 or 2, **characterized in that** the counter-bearing (98) is arranged transversely and in particular perpendicular to the opening (106) and/or the counter-bearing (98) has an entry area (102) for the first tool (100).

4. Machine tool as claimed in any one of the preceding claims, **characterized in that** the first access area (110) has a cross-sectional area (114) which is oriented transversely to the opening (106) and/or the first access area (110) has a cross-sectional area (114) which is oriented at least approximately parallel to the counter-bearing (98) and/or the first access area (110) is associated to a linear first direction, which is a feed direction or machining direction of the first tool (100), wherein the first direction is oriented at least approximately parallel to or at an acute angle relative to the opening (106).

5. Machine tool as claimed in any one of the preceding claims, **characterized in that** the second access area (116, 116') has a cross-sectional area (120) which is parallel to or at an acute angle of less than 30° relative to the opening (106) and/or the second access area (116, 116') has a cross-sectional area (120) which is oriented transversely to the counter-bearing (98) and/or the second access area (116, 116') is associated to a linear second direction, which is a feed direction or machining direction of the second tool (118), wherein the second direction is oriented transversely relative to the opening (106).

6. Machine tool as claimed in any one of the preceding claims, **characterized in that** the first access area (110) and the second access area (116, 116') are arranged and configured such that starting from a positioning of the first access area (110) relative to a point fixed in space, the second access area (116, 116') is positionable relative to that point fixed in space by way of a pivoting movement of the workpiece clamping apparatus (82) as a whole and/or starting from a positioning of the second access area (116) relative to a point fixed in space, the first access area (110) is positionable relative to that point fixed in space by way of a pivoting movement of the workpiece clamping apparatus (82) as a whole.

7. Machine tool as claimed in any one of the preceding claims, **characterized by** a height adjustment device (134) by way of which the counter-bearing (98) is lockably adjustable in its vertical position relative to a receptacle bottom (90) of the at least one receptacle (86).

8. Machine tool as claimed in any one of the preceding claims, **characterized in that** a receptacle bottom (90) is provided with at least one through-recess (122) for the second tool (118).

9. Machine tool as claimed in any one of the preceding claims, **characterized in that** the at least one tool spindle (18a, 18b) is oriented in a horizontal direction relative to the direction of gravity (g) and/or the at least one tool spindle (18a, 18b) and the at least one workpiece carrier (32) are displaceable relative to each other in at least three linearly independent directions (X, Y, Z).

10. Machine tool as claimed in any one of the preceding claims, **characterized in that** by means of the at least one workpiece carrier (32), via a pivoting movement thereof, the first access area (110) or the second access area (116, 116') is positionable in a machining position relative to the at least one tool spindle (18a, 18b).

11. Machine tool as claimed in any one of the preceding claims, **characterized in that** the at least one workpiece carrier (32) has at least one through-recess (80) for the second tool (118).

12. Machine tool as claimed in any one of the preceding claims, **characterized in that** the at least one tool spindle (18a, 18b) comprises a tool (200) having one or more tool elements (208) that are retractable and extendable, wherein in particular an actuation by means of at least one rod (206) is provided.

13. Use of the machine tool as claimed in any one of the preceding claims for machining an engine block as a workpiece (60) with a crankshaft bearing bore machining operation as the first machining operation (66) and a cylinder bore machining operation as the second machining operation (70).

14. Method for machining a workpiece on a machine tool according to which the workpiece (60) is fixed in a workpiece clamping apparatus (82), and a first machining operation (66) is performed using a first tool (100), wherein the first tool (100) is positioned on a counter-bearing (98) of the workpiece clamping apparatus (82), and a second machining operation (70) is performed on the workpiece separated in time from the first machining operation (66) and using a second tool (118), wherein the second tool (118) is positioned relative to the workpiece clamping apparatus (82) without a counter-bearing and wherein the workpiece (60) is located in the same clamping setup for the first machining operation (66) and for the second machining operation (70), wherein after completion of the first machining operation (66), the workpiece clamping apparatus (82) is pivoted as a whole in order to position the workpiece (60) relative to the second tool (118) for the second machining operation (70) and/or the workpiece clamping apparatus (82) is pivoted as a whole after completion of the second machining operation (70) in order to position the workpiece (60) relative to the first tool (100) for the first machining operation (66).

15. Method as claimed in claim 14, **characterized in that** the first machining operation (66) is a crankshaft bearing bore machining operation and the second machining operation (70) is a cylinder bore machining operation, these machining operations being performed on an engine block as a workpiece (60).

16. Method as claimed in claim 14 or 15, **characterized in that** the workpiece (60) is inserted into a receptacle (86) of the workpiece clamping apparatus (82) in a linear direction and is removed therefrom in a counter -direction.

17. Method as claimed in any one of claims 14 to 16, **characterized in that** the first tool (100) comprises at least one tool element advanceable towards the workpiece (60), wherein the at least one tool element is in a retracted position when the first tool (100) enters a recess of the workpiece (60) and is then extended for machining the workpiece, wherein in particular the first tool (100) is displaced in a direction counter to that of a direction of entry thereof for machining the workpiece.

## Revendications

1. Machine-outil, comportant au moins un dispositif de serrage de pièce (82) et au moins une broche porte-outil (18a; 18b), **caractérisée en ce que** au moins un dispositif de serrage de pièce (82) est disposé contre au moins un support de pièce (32) de façon fixe ou amovible, le dispositif de serrage de pièce (82) comportant : au moins un évidement (86) pour une pièce (60), au moins un évidement (86) présentant une paroi (92) et une ouverture (106), sur laquelle la pièce (60) peut être placée dans l'évidement (96) dans une direction linéaire (108) et peut être enlevé dans une direction opposée, un dispositif de tension (126) pour la fixation de la pièce (60) sur laquelle au moins un évidement (86), une première zone d'accès (110), sur laquelle un premier outil (100) vient en prise avec la pièce (60) pour une première opération d'usinage (66), un contre-appui (98) pour le premier outil (100), et une deuxième zone d'accès (116; 116'), sur laquelle un deuxième outil (118) vient en prise avec la pièce (60) pour une deuxième opération d'usinage (70), la première opération d'usinage (66) et la deuxième opération d'usinage (70) s'effectuant à différents endroits de la pièce (60) avec différents outils (100; 118) et le dispositif de serrage de pièce (82) sans contre-appui pour le deuxième outil (118), et **que** au moins un support de pièce (32) est inclinable d'au moins un axe (A; B).

2. Machine-outil selon la revendication 1, **caractérisée en ce que** le contre-appui (98) est disposé contre la paroi (92) d'au moins un évidement (86) ou est formé ou forme au moins une partie de la paroi (92).

3. Machine-outil selon la revendication 1 ou 2, **caractérisée en ce que** le contre-appui (98) est disposé transversalement et, en particulier, verticalement vis-à-vis de l'ouverture (106) et/ou le contre-appui (98) présente une zone d'immersion (102) pour le premier outil (100).

4. Machine-outil selon une des revendications précédentes, **caractérisée en ce que** la première zone d'accès (110) présente une surface de section transversale (114), laquelle est orientée transversalement à l'ouverture (106) et/ou la première zone d'accès (110) présente une surface de section transversale (114), laquelle est orientée au moins approximativement parallèlement au contre-appui (98) et/ou une première direction linéaire est donnée à la zone d'accès (110), laquelle est une direction d'avance ou direction d'usinage du premier outil (100), la première direction étant orientée au moins approximativement parallèlement ou dans un angle aigu par rapport à l'ouverture (106).

5. Machine-outil selon une des revendications précédentes, **caractérisée en ce que** la deuxième zone d'accès (116; 116') présente une surface de section transversale (120), laquelle se situe parallèlement ou dans un angle aigu inférieur à 30 ° par rapport à l'ouverture (106) et/ou la deuxième zone d'accès (116; 116') présente une surface de section transversale (120), laquelle est orientée transversalement au contre-appui (98) et/ou une deuxième direction linéaire est donnée à la deuxième zone d'accès (116; 116'), laquelle est une direction d'avance ou direction d'usinage du deuxième outil (118), la deuxième direction étant orientée transversalement à l'ouverture (106).

6. Machine-outil selon une des revendications précédentes, **caractérisée en ce que** la première zone d'accès (110) et la deuxième zone d'accès (116; 116') sont disposées et formées de façon à ce que à partir d'un positionnement de la première zone d'accès (110) jusqu'à un point fixe dans l'espace de la deuxième zone d'accès (116; 116') est positionnable en entier sur ce point fixe dans l'espace par un mouvement de pivotement du dispositif de serrage de pièce (82) et/ou à partir d'un positionnement de la deuxième zone d'accès (116) sur un point fixe dans l'espace, la première zone d'accès (110) est positionnable en entier sur ce point fixe dans l'espace par un mouvement de pivotement du dispositif de serrage de pièce (82).

7. Machine-outil selon une des revendications précédentes, **caractérisée en ce que** un dispositif de réglage en hauteur (134), au moyen duquel le contre-appui (98) est réglable de façon déterminable dans sa position en hauteur par rapport à un fond de logement (90) d'au moins un évidement (86).

8. Machine-outil selon une des revendications précédentes, **caractérisée en ce que** un fond de logement (90) est doté d'au moins une cavité de passage (122) pour le deuxième outil (118).

9. Machine-outil selon une des revendications précédentes, **caractérisée en ce que** au moins une broche d'outil (18a;18b) est orientée horizontalement par rapport au sens de gravité (g) et/ou au moins une broche d'outil (18a;18b) et au moins un support de pièce (32) sont déplaçables au moins dans trois directions linéaires (X, Y, Z) indépendantes les unes des autres.

10. Machine-outil selon une des revendications précédentes, **caractérisée en ce que** la première zone d'accès (110) ou la deuxième zone d'accès (116;116') sont positionnables au choix par au moins un support de pièce (32) par un mouvement de pivotement dans une position d'usinage par rapport à au moins une broche d'outil (18a; 18b).

11. Machine-outil selon une des revendications précédentes, **caractérisée en ce que** au moins un support de pièce (32) présente au moins une cavité de passage (80) pour le deuxième outil (118).

12. Machine-outil selon une des revendications précédentes, **caractérisée en ce que** au moins une broche d'outil (18a; 18b) présente un outil (200) avec un ou plusieurs éléments d'outil (208), lesquels sont rétractables et extensibles, un actionnement étant notamment prévu au moyen d'au moins une tige (206).

13. Utilisation d'une machine-outil selon une des revendications précédentes pour l'usinage d'un bloc-moteur comme pièce (60) avec une opération d'usinage-alésage du palier de vilebrequin comme première opération d'usinage (66) et une opération d'usinage-alésage du cylindre comme deuxième opération d'usinage (70).

14. Procédé pour l'usinage d'une pièce sur une machine-outil, selon lequel la pièce (60) est fixée dans un dispositif de serrage de pièce (82) et une première opération d'usinage (66) est exécutée avec un premier outil (100), le premier outil (100) étant positionné contre un contre-palier (98) du dispositif de serrage de pièce (82), et une deuxième opération d'usinage (70) temporairement séparée de la première opération d'usinage (66) est exécutée sur la pièce (60) avec un deuxième outil (118), le deuxième outil (118) étant positionné sans contre-appui par rapport au dispositif de serrage de pièce (82), et la pièce (60) se trouvant dans le même évidement pour la première opération d'usinage (66) et la deuxième opération d'usinage (70), dans lequel après la conclusion de la première opération d'usinage (66) le dispositif de serrage de pièce (82) est pivoté en entier pour positionner la pièce (60) par rapport au deuxième outil (118) pour la deuxième opération d'usinage (70), et/ou le dispositif de serrage de pièce (82) est pivoté en entier après la conclusion de la deuxième opération d'usinage (70) pour positionner la pièce (60) par rapport au premier outil (100) pour la première opération d'usinage (66).

15. Procédé selon la revendication 14, **caractérisée en ce que** la première opération d'usinage (66) est un procédé d'usinage-alésage du palier de vilebrequin et la deuxième opération d'usinage (70) est un procédé d'usinage-alésage de cylindre, lesquels sont exécutés sur un bloc-moteur comme pièce à usiner (60).

16. Procédé selon la revendication 14 ou 15, **caractérisé en ce que** la pièce (60) est placée dans une direction linéaire dans un évidement (86) du dispositif de serrage de pièce (82) et est retirée dans un sens inverse.

17. Procédé selon une des revendication 14 à 16, **caractérisé en ce que** le premier outil (100) présente au moins un élément d'outil pouvant être approché de la pièce (60), au moins un élément d'outil étant introduit dans un évidement de la pièce (60) lors de la plongée du premier outil (100) et est ensuite sorti pour l'usinage de la pièce, le premier outil (100) étant en particulier déplacé pour l'usinage de la pièce dans le sens inverse à une direction d'enfoncement.
